# EUROPEAN PATENT SPECIFICATION

(11) **EP 0 756 110 B1**
(45) Date of publication and mention of the grant of the patent: **24.01.2001**
(21) Application number: 96110416.3
(22) Date of filing: 27.06.1996
(51) Int. Cl.: F16H 57/05

(54) **Continuously variable transmission system**
Stufenloses Getriebe
Transmission à variation continue

(30) Priority: 29.06.1995 JP 16436995; 29.06.1995 JP 16436895
(43) Date of publication of application: 29.01.1997
(73) Proprietor: YAMAHA HATSUDOKI KABUSHIKI KAISHA, Iwata-shi Shizuoka-ken, 438 (JP)
(72) Inventor: Morita, Toshimasa, Iwata-shi, Shizuoka-ken (JP); Toshinobu, Shigematsu, Iwata-shi, Shizuoka-ken (JP); Naoyuki, Sekiya, Iwata-shi, Shizuoka-ken (JP)
(74) Representative: Grünecker, Kinkeldey, Stockmair & Schwanhäusser Anwaltssozietät

(56) References cited:
- GB-A- 2 114 945
- US-A- 4 671 781
- US-A- 4 671 782

## Description

This invention relates to a continuously variable transmission system of the V-belt type in particular for a motorcycle, comprising a drive pulley connectable to a crankshaft of an engine unit and a driven pulley connectable to a driven shaft, a V-belt connecting said pulleys, a transmission case body and a transmission case cover constituting a transmission case accommodating a belt chamber, and a cooling device for cooling said belt chamber.

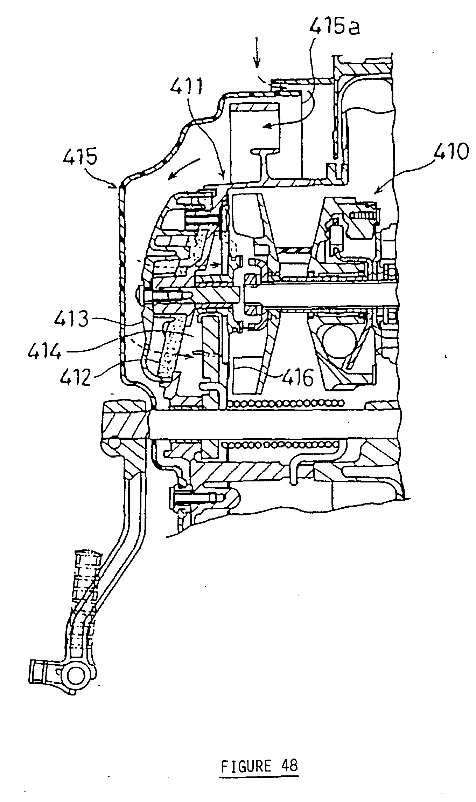

Motorcycles of a scooter type with a power unit having a V-belt type CVT for instance are in some cases provided with an air cleaner compartment for filtering air introduced into the belt chamber of the CVT. One conventional type of such an air cleaner compartment is shown in FIG. 48 in which a partition plate (416) is secured with bolts to the front part of the transmission case (411) of a CVT (410), and a cap (413) is attached to the outside of the partition plate (416) with an air cleaner element (412) interposed to constitute an air cleaner compartment (414). In this case, a plastic cover (415) is attached to the outside of the transmission case (411) to suppress noise in the transmission case from coming out, and cooling air is introduced as shown with arrows in FIG. 48 through a cooling air suction inlet (415a) formed in the front wall of a transmission case cover (415).

However, the structure shown in FIG. 48 in which the cap is attached to the outside of the transmission case and the partition plate is installed inside the transmission case to form the air cleaner compartment has a problem that a separate cap is required and the number of parts increases accordingly. Another problem with the structure in which cooling air is introduced through the front wall of the plastic cover (415) is that water and dust along with the cooling air are likely to enter and shortens the life of the air cleaner element. Still another problem is that time and labor is required for carrying out replacement and cleaning of the air cleaner element because both of the plastic cover (415) and the cap (413) have to be removed and attached.

US-A 4 671 781 as the closest prior art discloses a continuously variable transmission system as indicated above. This system has a transmission case comprising an inner transmission body. The inner transmission body is integrally formed with a crankcase of an engine. Further, a transmission case cover protects said transmission case body to the outside. A front transmission cover is attached to the outside of a front part of said transmission case cover. As a result of this, the rear parts of the transmission case is unprotected.

Accordingly, it is an objective of the present invention to provide an improved continuously variable transmission system of the V-belt type as indicated above for improving safety for riders and having an improved cooling system which is always reliable and producable with low costs.

According to the invention, this objective is solved for a continuously variable transmission system of the V-belt type as indicated above in that said transmission case cover comprises a front cover and a rear cover as seen in driving direction, wherein said front cover overlaps said rear cover at a joining area of the front cover and the rear cover, and wherein a suction inlet being directed to the rear direction opposite to the driving direction, is provided in said joining area.

Another aspect of this invention made in view of the situation with the conventional arrangement described above is to provide a cooling device for a power unit, which makes it possible to form the air cleaner compartment without increasing the number of parts, to prevent water and dust from entering, and to alleviate time and labor of removal and attachment work.

For the above-mentioned continuously variable transmission system, this problem is solved in that the front part of the outside wall surface of the transmission case is provided with a recess receding toward the drive pulley, an air cleaner compartment is formed with the recess and said front part of said transmission case, and that an air cleaner element is interposed between said transmission case cover and said recess.

Other preferred embodiments of the present invention are laid down in further dependent claims.

With the cooling device of this embodiment, since the transmission case cover attached to the outside of the transmission case is split into two, front and rear parts, and the air cleaner compartment is formed with the front transmission case cover and the front part of the transmission case, the air cleaner compartment is constituted with existing parts without increasing the number of parts and cost is reduced in comparison with the conventional arrangement in which a cap and a partition plate are used.

Furthermore, since the suction inlet is provided in the rear end of the front transmission case cover, that is to say, opposite the vehicle advancing direction, entry of water and dust is reduced to elongate the life of the air cleaner element. In this case, since the front transmission case cover overlaps with the rear transmission case cover, noise suppression effect is improved.

Furthermore, servicing work efficiency is improved because the air cleaner element in the air cleaner compartment can be replaced or cleaned simply by removing and attaching the transmission case cover.

Since the air cleaner compartment is constituted with the recess formed in the front part of the transmission case and the transmission case cover attached to the outside of the transmission case, the cap and the partition plate are formed by utilizing existing parts without increasing the number of parts, the air cleaner compartment area is made with a small depth, and cost is reduced in comparison with the conventional arrangement in which a cap and partition plate are used. Furthermore, since the recess is formed in the transmission case, its rigidity is increased.

Furthermore, since the suction inlet is provided in the transmission case cover, entry of water and dust is reduced to elongate the life of the air cleaner element in comparison with the arrangement in which the inlet is open toward the vehicle advancing direction.

Furthermore, servicing work efficiency is improved because the air cleaner element in the air cleaner compartment can be replaced or cleaned simply by removing and attaching the transmission case cover.

In the following, the present invention is explained in greater detail with respect to several embodiments thereof in conjunction with the accompanying drawings, wherein:
FIG. 1 is a left side view of a scooter type motorcycle according to an embodiment of this invention;
FIG. 2 is a left side view of a suspension portion of a power unit of the embodiment;
FIG. 3 is a cross-sectional view taken along the line III-III in FIG. 2;
FIG. 4 is a left side view of a vertical pipe of the embodiment;
FIG. 5 shows the manufacturing process of the vertical pipe;
FIG. 6 is the unfolded drawing of the vertical pipe;
FIG. 7 is a left side view of the steering device of the embodiment;
FIG. 8 is a cross-sectional view showing the attachment structure of the steering shaft;
FIG. 9 is a plan view of the power unit;
FIG. 10 is a left side view of the power unit;
FIG. 11 is a rear view of the power unit;
FIG. 12 is right side view of the power unit;
FIG. 13 is a plan view partially in cross section of the power unit;
FIG. 14 is a left side view of the layout of the radiator of the embodiment;
FIG. 15 is a plan view of the layout of the radiator of the embodiment;
FIG. 16 is a simplified front view of the radiator;
FIG. 17 is a simplified plan view of the radiator;
FIG. 18 is a front view of the vehicle body cover of the embodiment;
FIG. 19 is a left side view of the front frame of the embodiment;
FIG. 20 is a left side view of the cooling structure of the radiator of the embodiment;
FIG. 21 is a cross-sectional view of the front cover of the embodiment;
FIG. 22 is a rear view of the leg shield of the embodiment;
FIG. 23 is a cross-sectional view of the part of the leg shield where the main switch is attached;
FIG. 24 is a cross-sectional view of the storage compartment of the leg shield;
FIG. 25 is a cross-sectional view of the storage compartment of the leg shield;
FIG. 26 is a cross-sectional view of a lock member for the leg shield;
FIG. 27 is a plan view of foot placing portions of the footboard;
FIG. 28 is a cross-sectional view of foor placing portions of the footboard;
FIG. 29 is a left side view of a side cover of the embodiment;
FIG. 30 is a cross-sectional view of the upper edge portion of the side cover;
FIG. 31 is a cross-sectional view of the grab bar;
FIG. 32 is a side view of the rear part of the grab bar;
FIG. 33 is a cross-sectional side view of the rear part of the seat of the embodiment;
FIG. 34 is a side view of the rear carrier of the seat of the embodiment;
FIG. 35 is a perspective view of the seat;
FIG. 36 is a side view of the backrest of the seat;
FIG. 37 shows the structure of the adjustment mechanism of the backrest of the seat;
FIG. 38 is a cross-sectional side view of the adjustment mechanism;
FIG. 39 is a cross-sectional side view of the front part of the seat;
FIG. 40 is an exploded view of the fuel lid;
FIG. 41 shows a structure of the seat damper;
FIG. 42 is a plan view of the stand device of the embodiment;
FIG. 43 is a left side view of the stand device;
FIG. 44 is a structural drawing showing the follow-up surface of the stand device;
FIG. 45 is an explanatory rear view of the stand device;
FIG. 46 shows the hinge of the embodiment;
FIG. 47 is an explanatory side view of the movement of the stand device; and
FIG. 48 is a cross-sectional view of a conventional air cleaner compartment.

Embodiments of this invention will he hereinafter described in reference to the appended drawings.

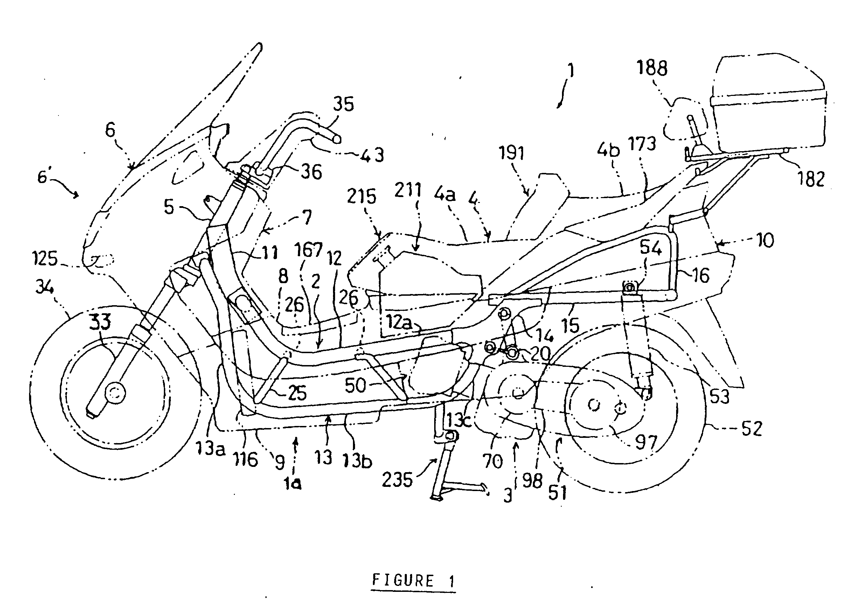

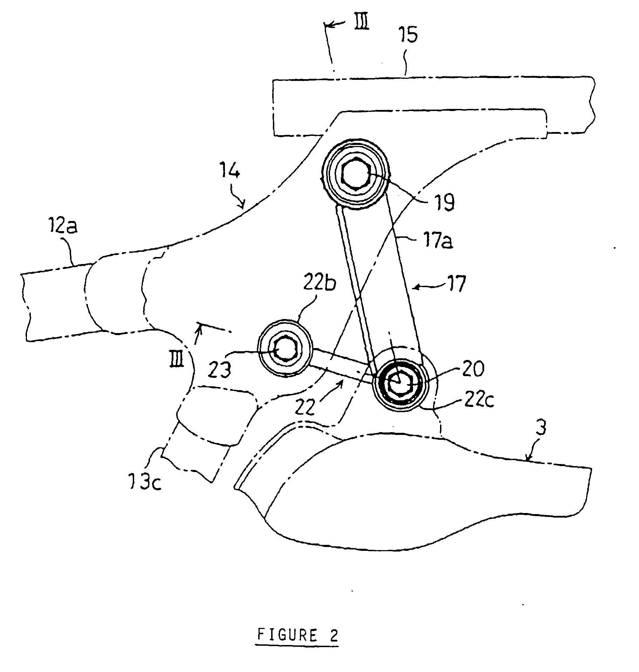

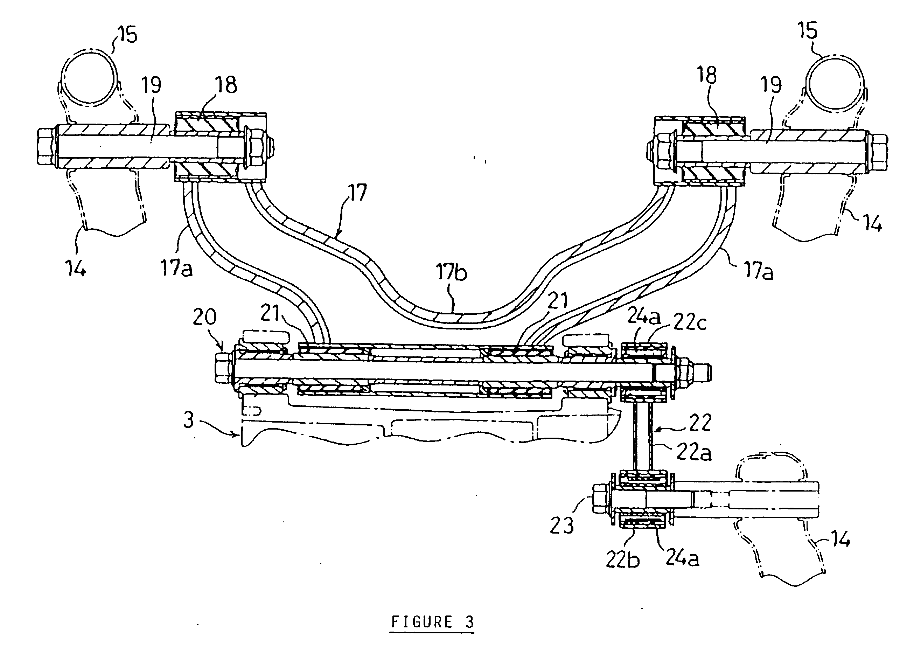

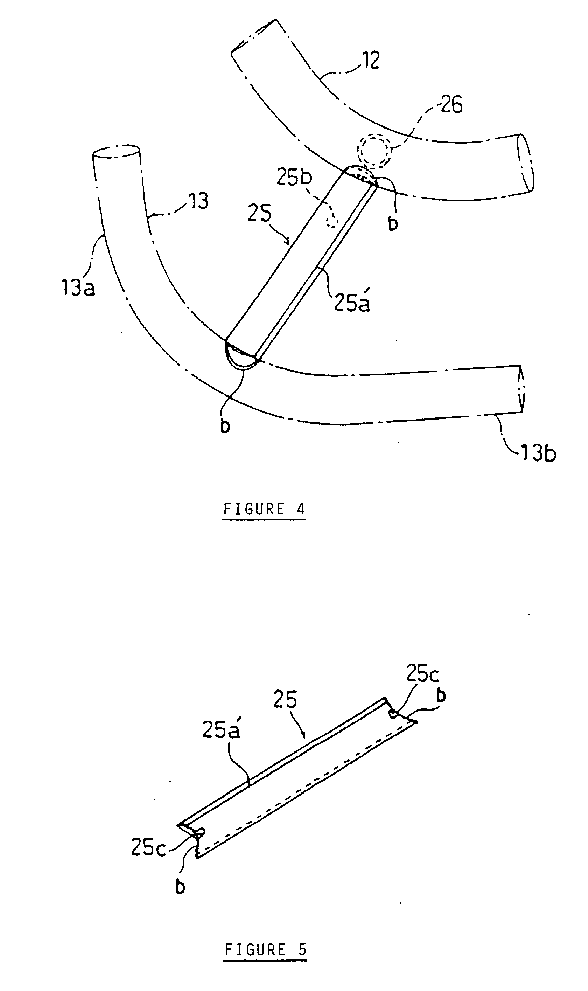

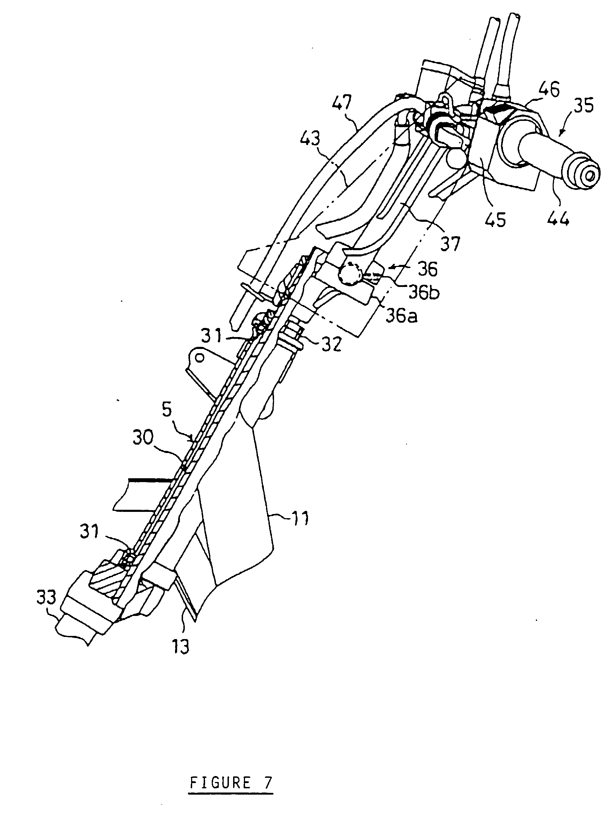

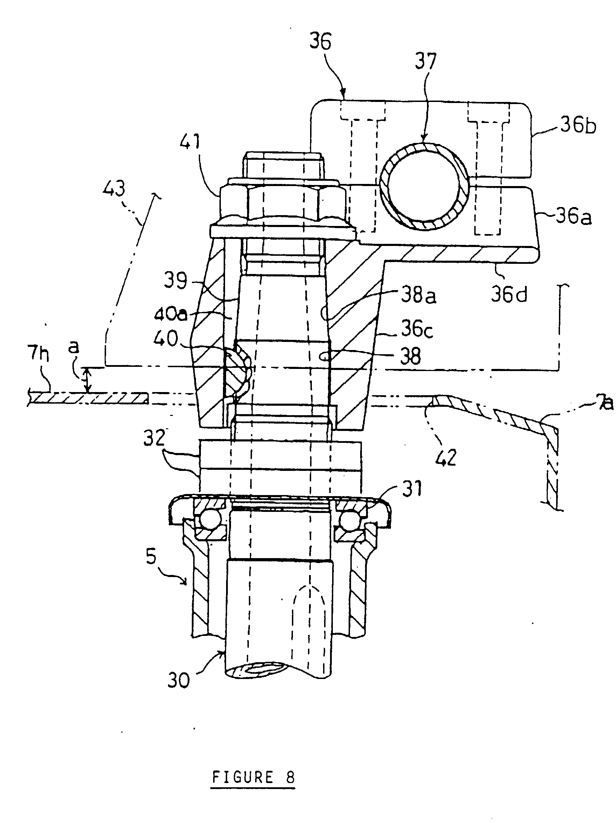

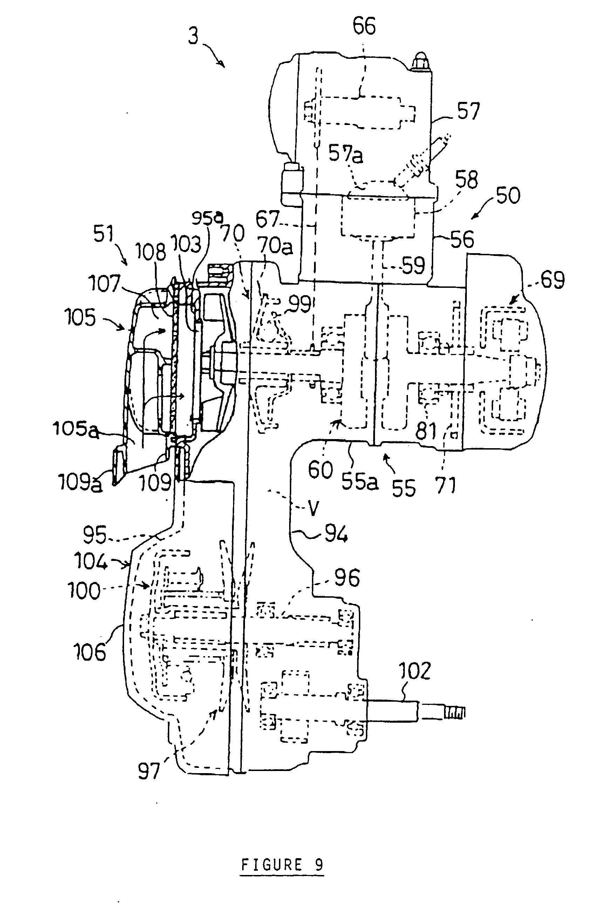

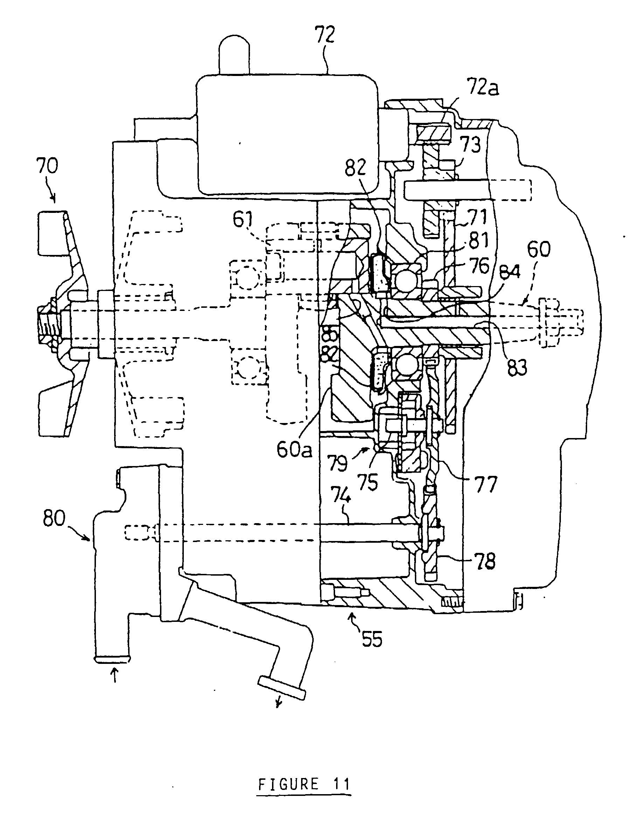

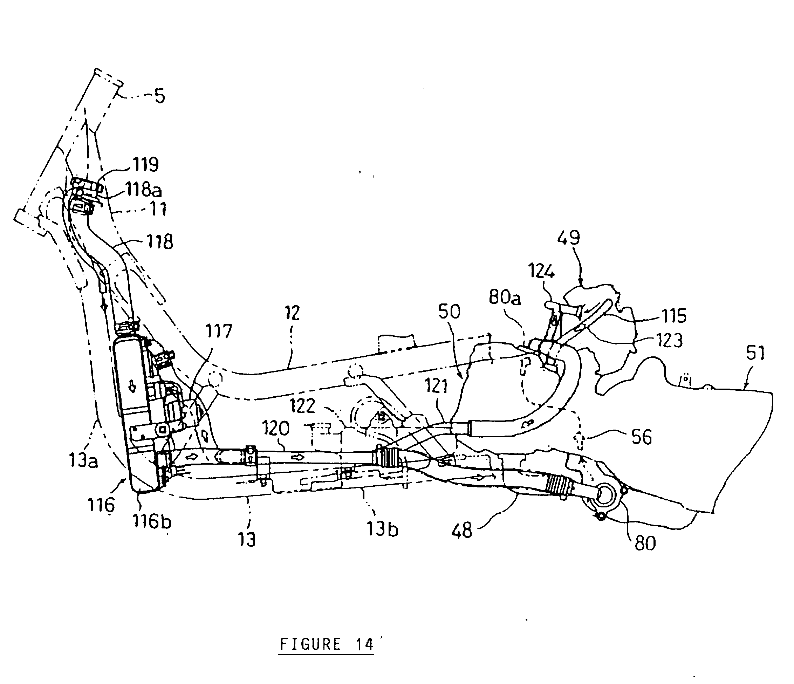

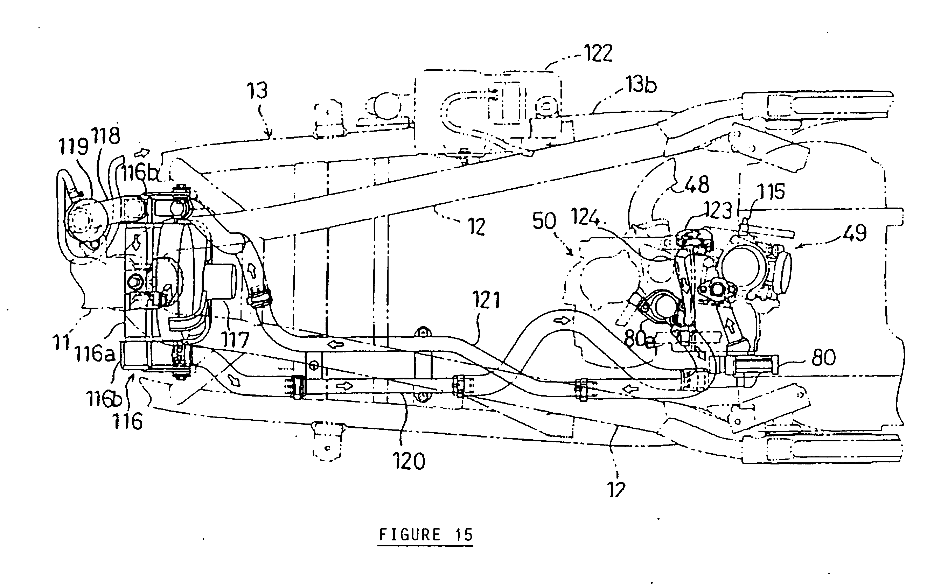

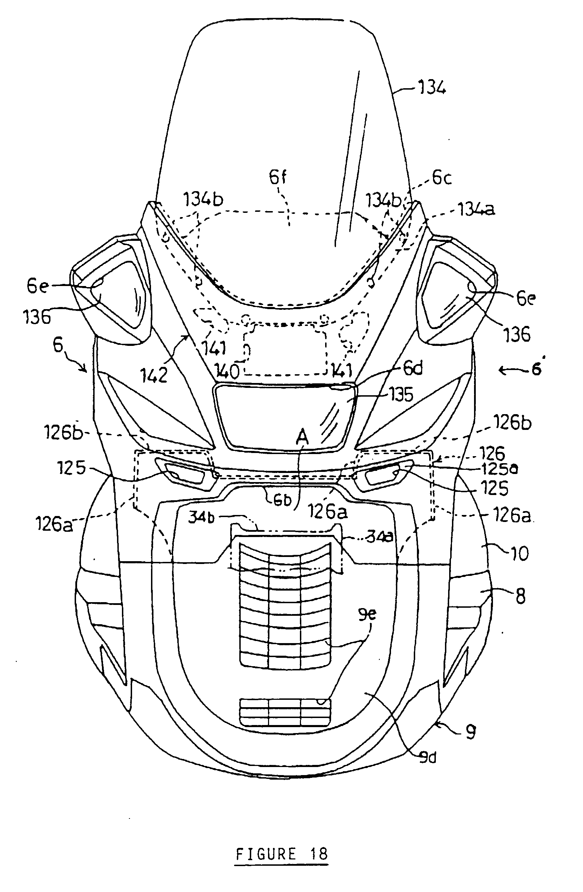

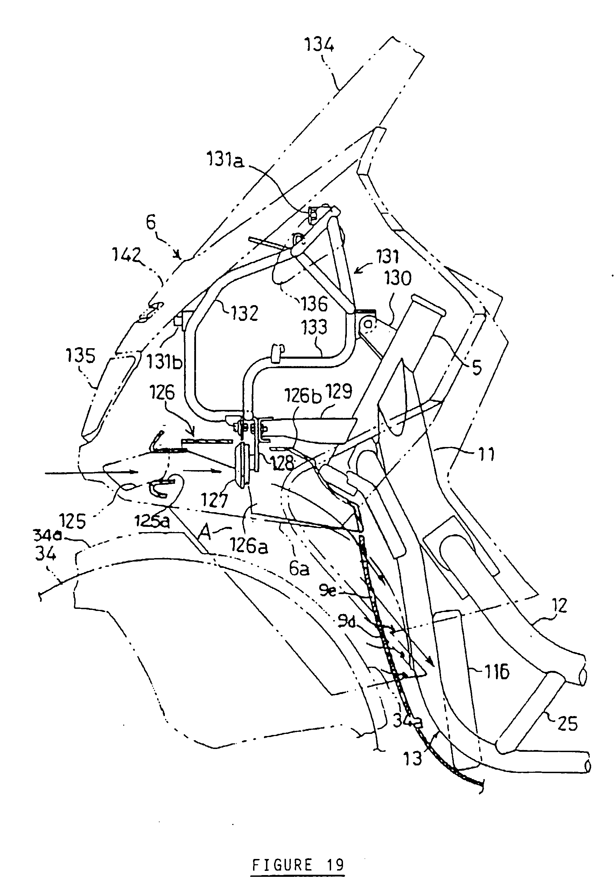

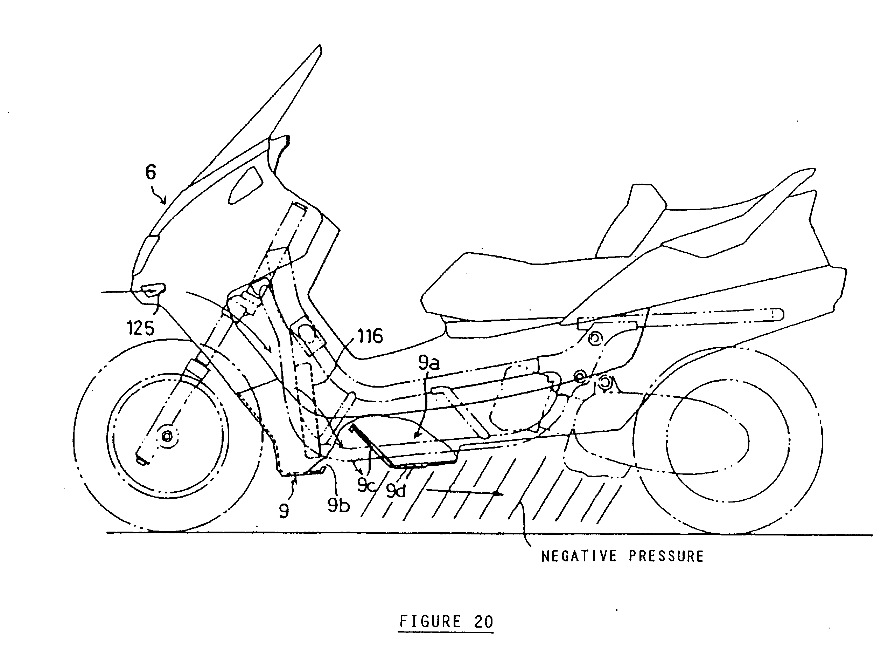

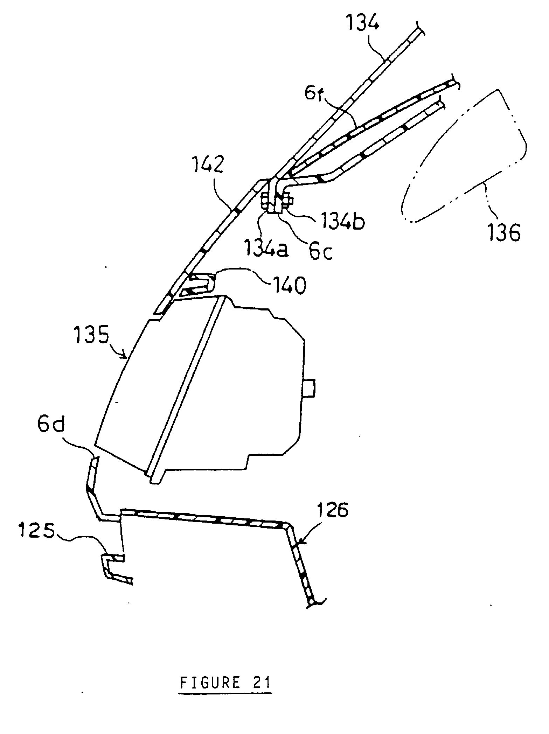

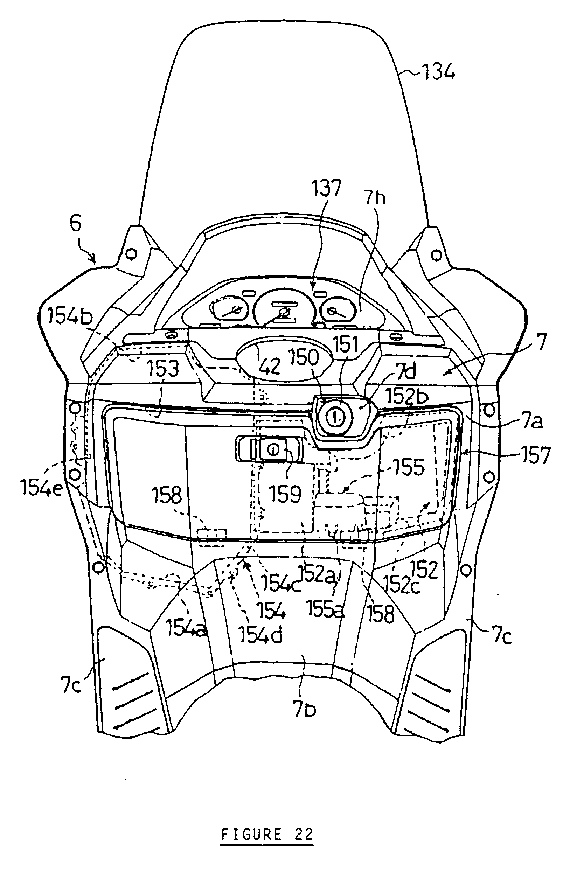

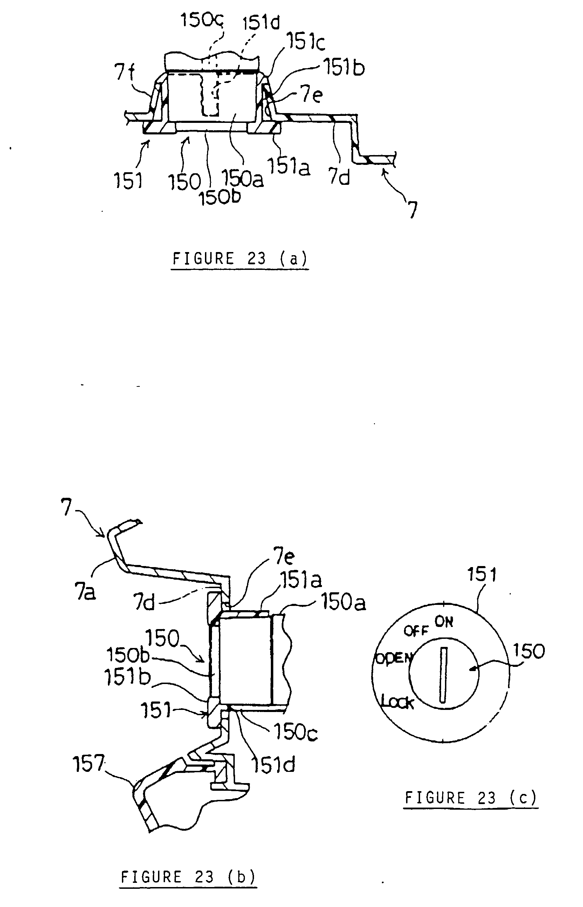

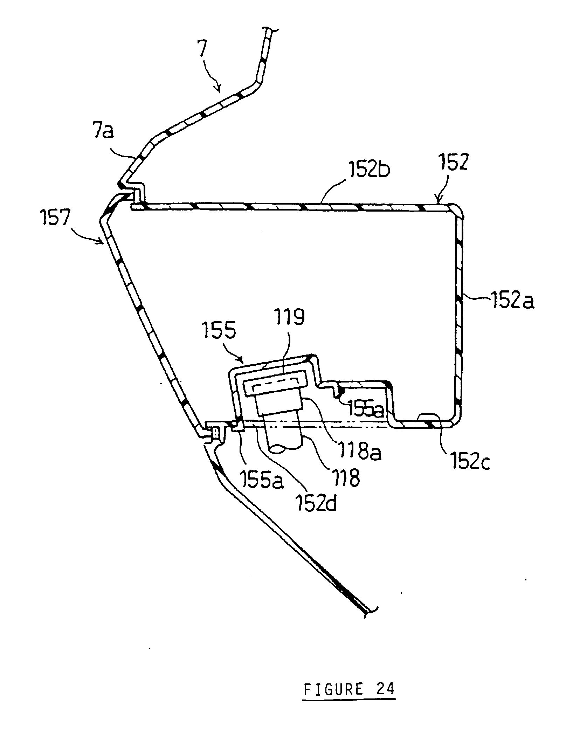

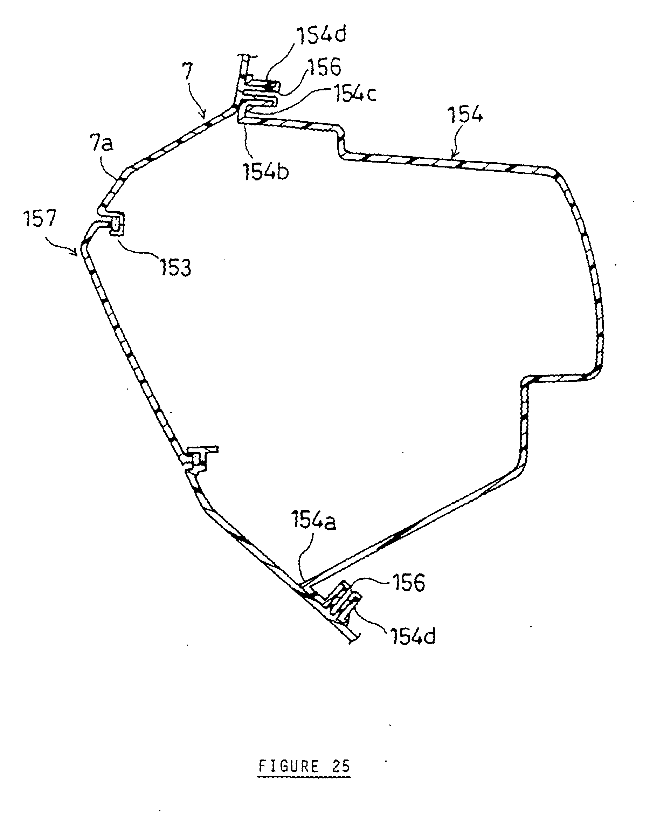

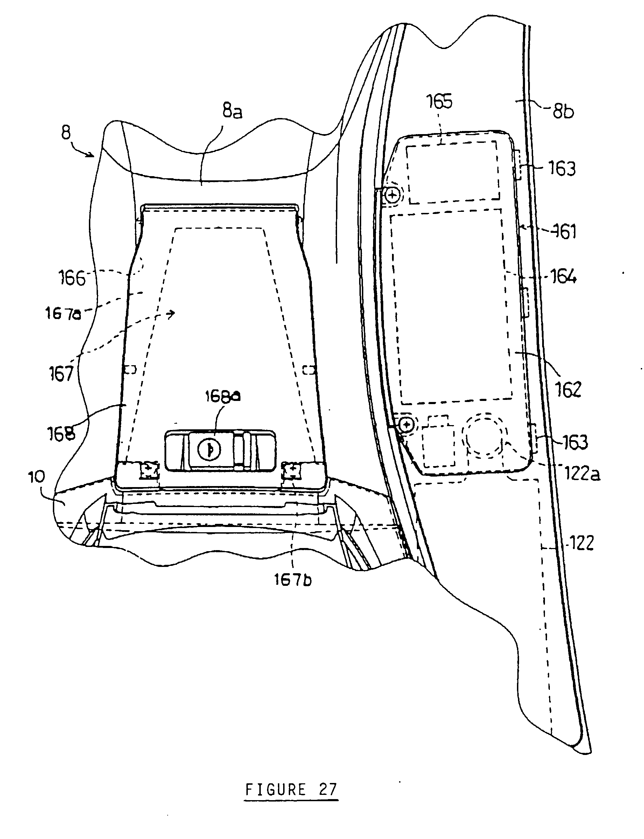

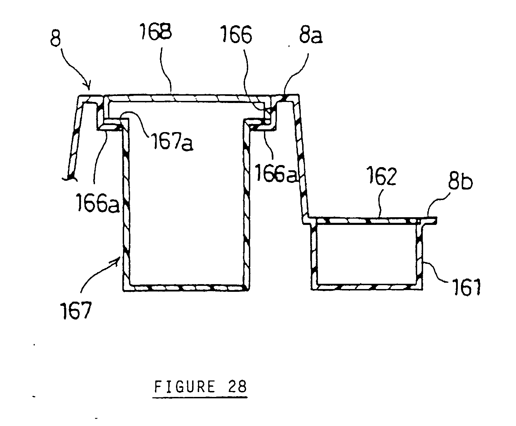

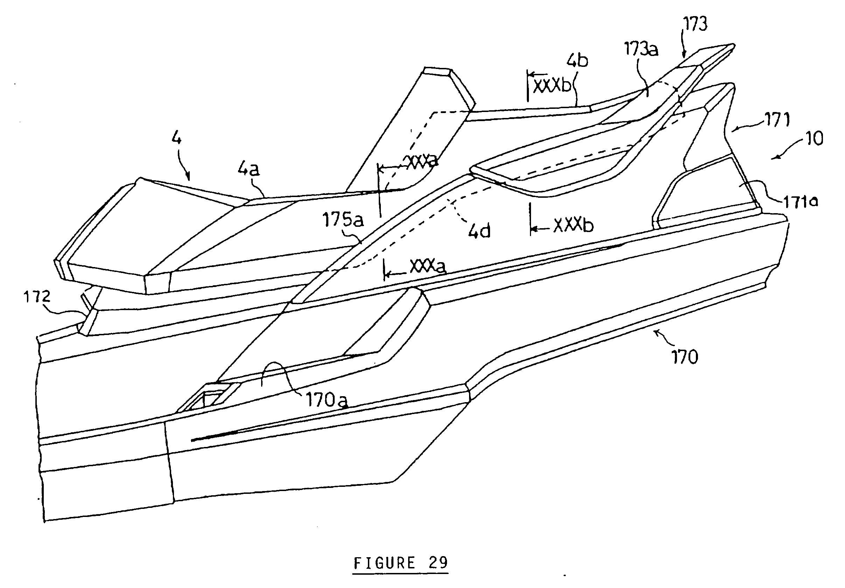

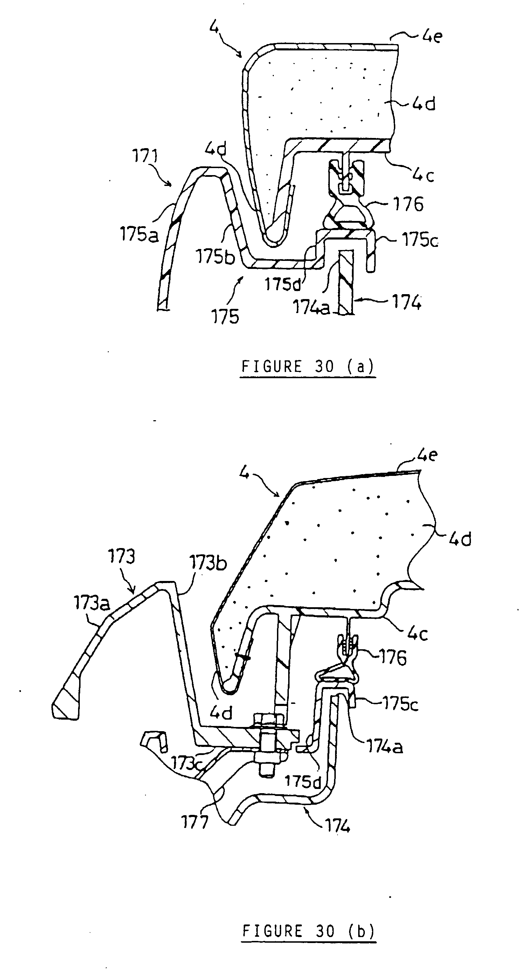

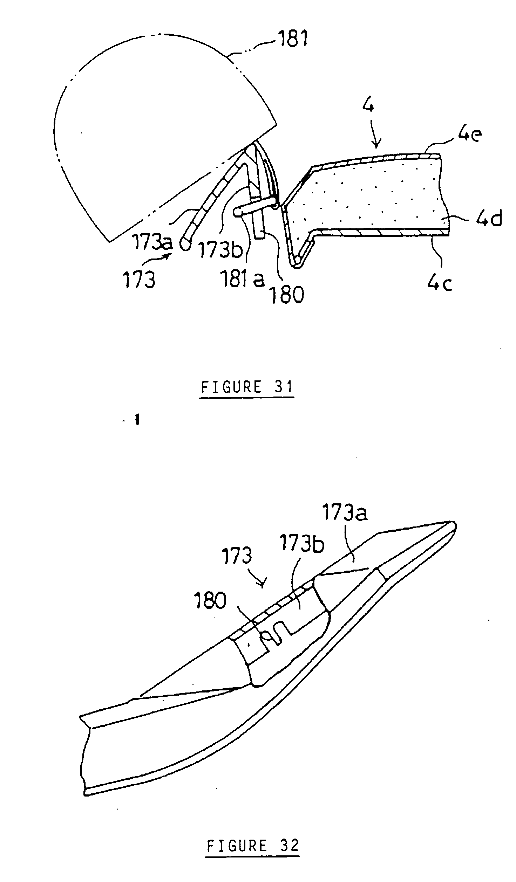

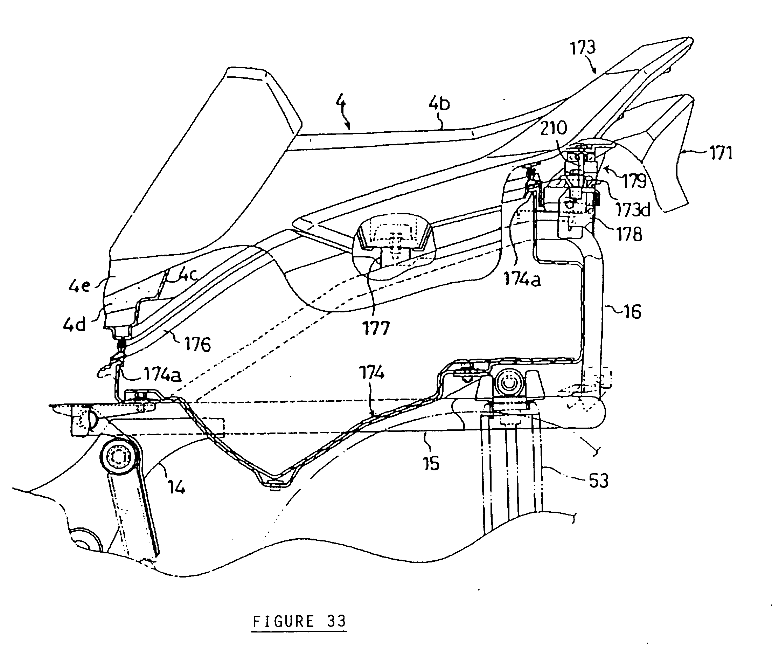

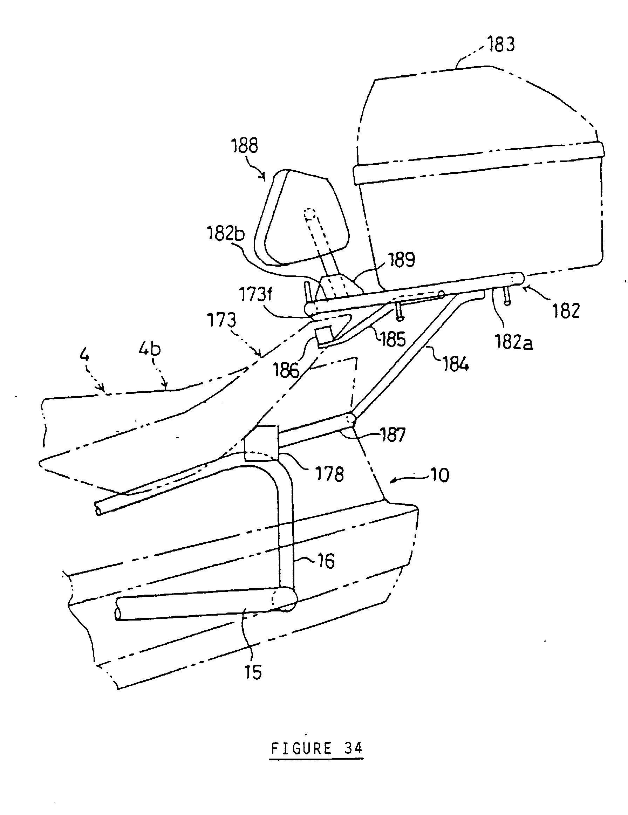

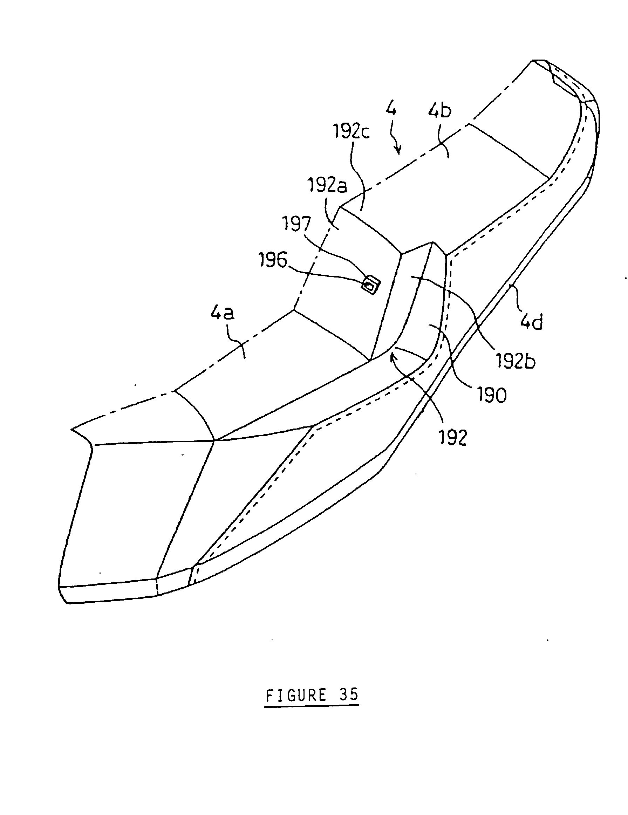

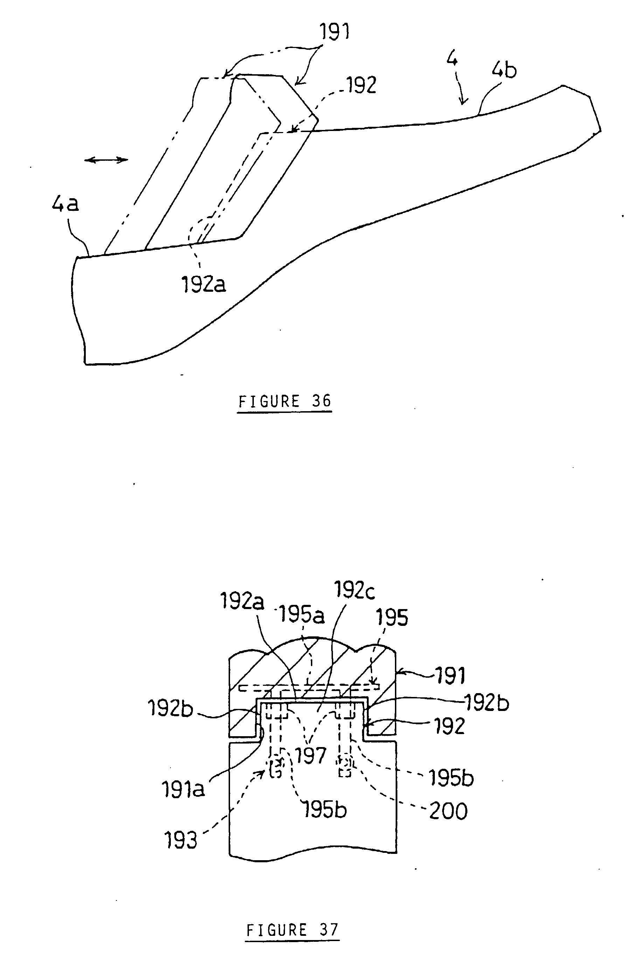

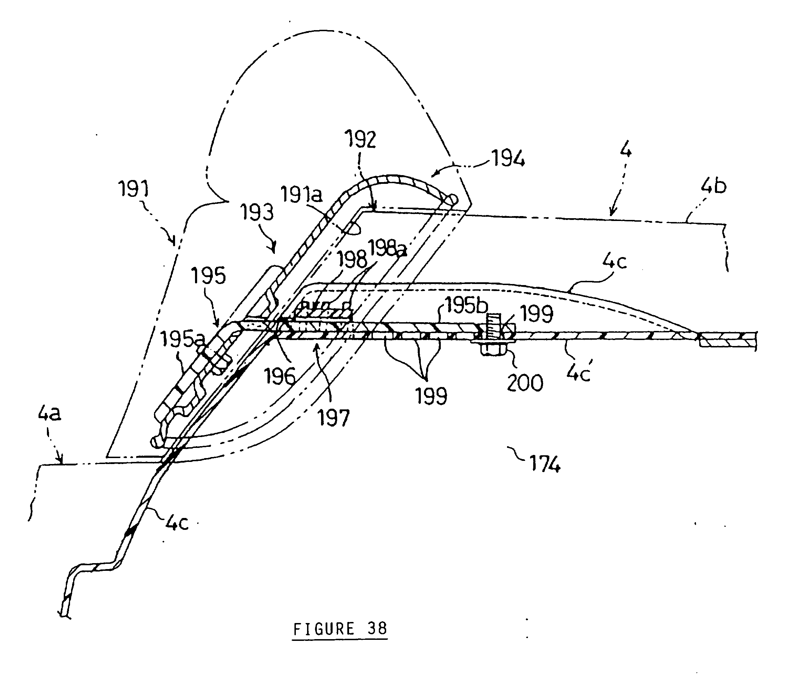

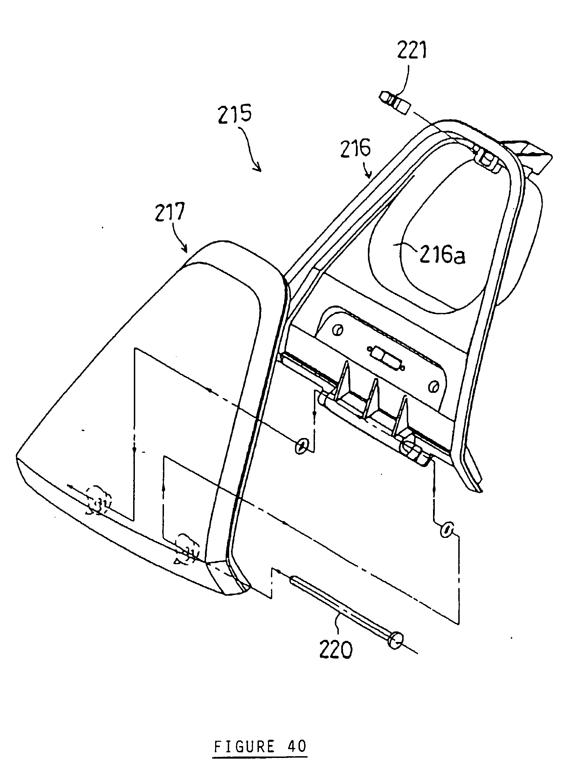

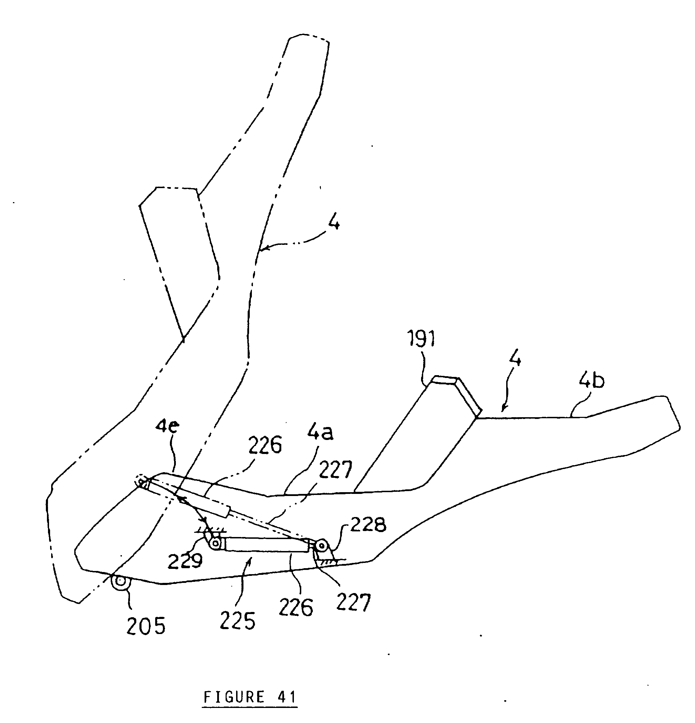

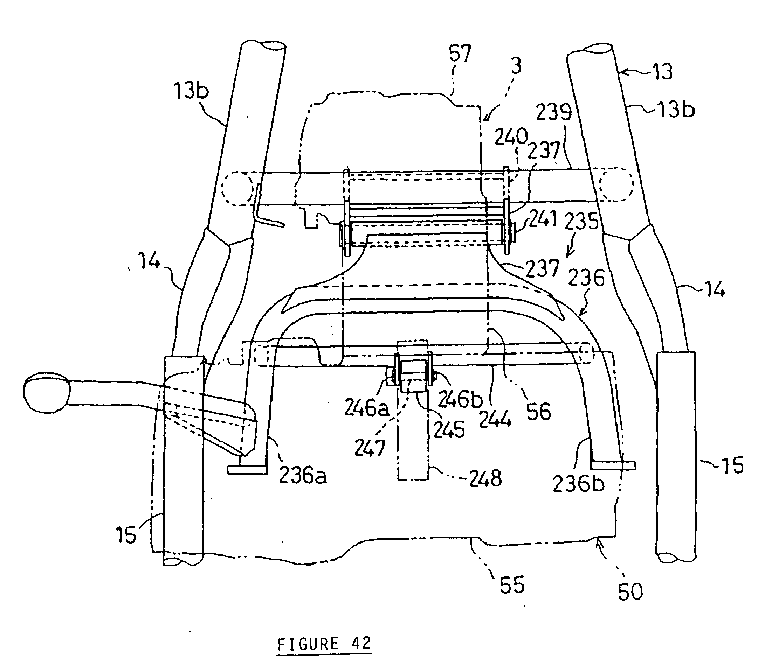

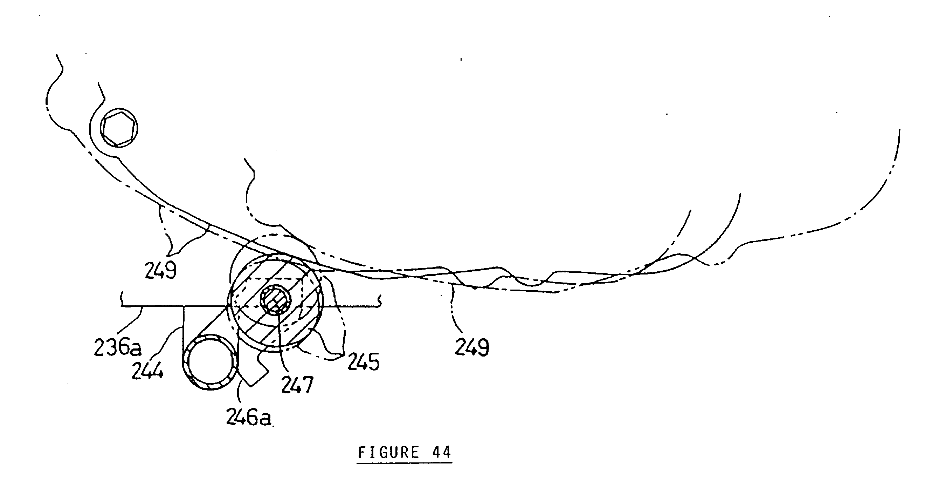

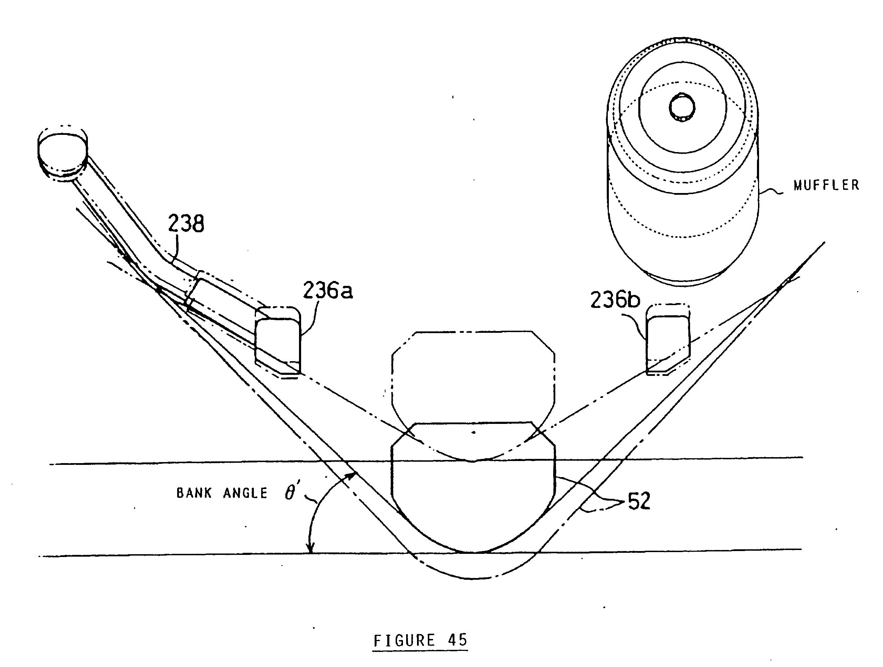

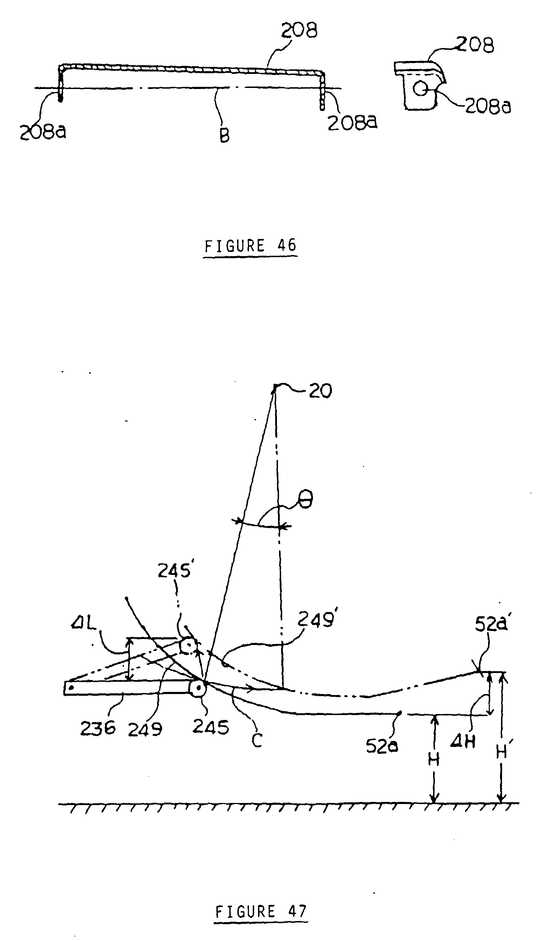

FIGs. 1 through 47 are drawings used for describing a scooter type motorcycle as an embodiment of this invention. FIG. 1 is left side view of the motorcycle. FIG. 2 is a left side view of a power unit mounting portion. FIG. 3 is a cross-sectional view taken along the line III-III in FIG. 2. FIGs. 4 - 6 are drawings for describing a manufacturing process of pipes. FIG. 7 is a left side view of a steering mechanism. FIG. 8 is a cross-sectional view of the area where handlebars are mounted. FIGs. 9 -13 are a plan view, a left side view, a back view, a right side view, and a partially cross-sectional plan view of a power unit. FIGs. 14 - 17 show the layout structure of a radiator in a left side view, a plan view, a front view, and a plan view, respectively. FIG. 18 is a front view of a vehicle body cover. FIG. 19 is a left side view of a front frame. FIG. 20 is a left side view showing a cooling structure of the radiator. FIG. 21 a cross-sectional side view of a front cover. FIG. 22 is a back view of a leg shield. FIGs. 23(a) and 23(b) are cross-sectional views of a switch attachment area. FIG. 23(c) is a view of a key hole area. FIGs. 24 -26 are cross-sectional views for describing a storage compartment. FIGs. 27 and 28 are a plan view and a cross-sectional view of a footboard, respectively. FIG. 29 is a left side view of a side cover. FIGs. 30(a) and 30(b) are cross-sectional back views of a side cover. FIGs. 31 and 32 are respectively a cross-sectional view and a side view of a grab bar. FIG. 33 is a view of rear part of the seat, partially in cross section. FIG. 34 is a side view of a carrier. FIGs. 35 -39 are respectively a perspective view, a side view, a plan view, a cross-sectional side view, and a partially cross-sectional side view of the seat device. FIG. 40 is a perspective view of a fuel lid. FIG. 41 is a mechanism drawing of a gas damper. FIGs. 42 - 45 are respectively a plan view, a left side view, a structural view, and an explanatory rear view of a stand device. FIG. 46 is a cross-sectional view of a hinge bracket. FIG. 47 is an explanatory side view of the movement of the stand member. By the way, the terms right and left, and front and rear, as used herein, refer as seen from a rider.

In the drawings are shown, a scooter type motorcycle (1) of this embodiment, roughly comprising a body frame (2), a swing type power unit (3) pivoted at about a middle underside of the body frame (2), a seat (4) mounted on the body frame (2), and a body cover (1a) surrounding the vehicle body.

The body cover (1a) is made of a plastic material, generally comprising a front cover (6), a leg shield (7), and specifically comprising a front body cover (6') surrounding a head pipe (5) of the body frame (2), a footboard (8) constituting foot placing areas below the leg shield (7), an under cover (9) located on the underside of the footboard (8), and side covers (10) covering the power unit (3) over the area extending from right and left areas below the seat to the area above the power unit (3).

The body frame (2) has the following constitution: A main frame (11) is connected to the middle part of the head pipe (5) and extends obliquely downward to the rear part of the vehicle body. Right and left pair of side frames (12) are connected at their front ends to the main frame (11) and extend obliquely downward and then generally horizontally straight toward the rear of the vehicle body.

Right and left pair of down tubes (13) are connected to the head pipe (5) at a position below the main frame (11), with each down tube (13) comprising; a tilted (front) portion (13a) extending obliquely downward toward the rear of the vehicle body, a straight (underside) portion (13b) extending from the lower end of the tilted portion (13a) generally horizontally toward the rear of the vehicle body, and a curved portion (13c) extending from the rear end of the straight portion (13b) obliquely upward toward the rear of the vehicle body.

The rear end (12a) of each side frame (12) and the curved portion (13c) of each down tube (13) are joined and fixed together with suspension brackets (14). Front ends of rear frames (15) extending generally straight rearward are connected to the suspension brackets (14). Support pipes (16) are connected to the rear frames (15) so as to extend from the front ends of the rear frame (15) obliquely up rearward and then generally vertically downward.

A suspension link (17) of a generally U shape in plane view is mounted between upper parts of the right and left suspension brackets (14). Right and left arm portions (17a) of the suspension link (17) are mounted on the suspension bracket (14) through rubber dampers (18) and bolts (19). The base portion (17b) of the suspension link (17) is pivoted for swinging up and down by means of a pivot shaft (20), with a rubber bushes (21) interposed by press fitting between the pivot shaft (20) and the suspension link (17).

The suspension bracket (14) is connected to the right end portion of the pivot shaft (20) through a compression rod (22). The compression rod (22) comprises a rod member (22a) with its ends connected to cylindrical members (22b) and (22c), with one cylindrical member (22b) secured with a bolt (23) to the lower part of the suspension bracket (14) while the other cylindrical member (22c) secured to the pivot shaft (20). The rear ends (12a) of the rear arms (2) are connected to the suspension brackets (14) between the bolts (23) and (19). The connection of the sides frames (12) increases rigidity in the front-rear direction. Rubber bushes (24) are interposed between the cylindrical member (22b) and the bolt (23), and between the cylindrical member (22c) and the pivot shaft (20). A hollow space (24a) is formed to extend in the circumferential direction at a radially middle position in the rubber bush (24) so that the spring constant changes according to input during acceleration and deceleration to improve vibration proof characteristic while preventing engine movement caused by driving and braking.

Curved portion of each side frame (12) is connected through a vertical pipe (25) to curved portion of each down tubes (13). Right and left side frames (12) are connected to each other at their curved portions and straight portions through lateral pipes (26). The vertical pipe (25) is made by forming a punched flat plate (25') into a cylinder.

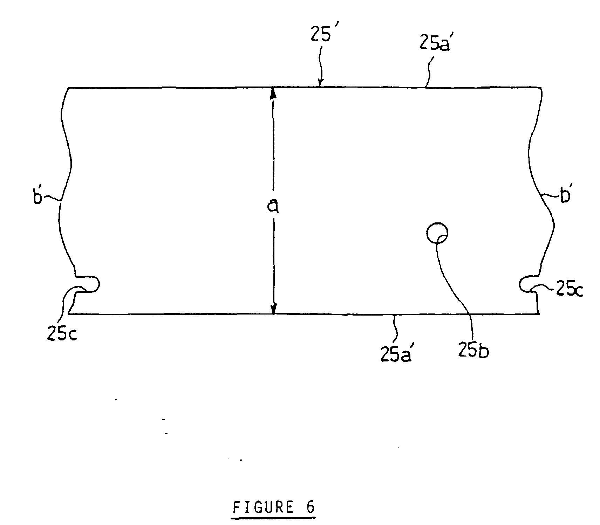

That is to say, as shown in FIGs. 4 - 6, a flat plate (25') having an unfolded circumference dimension (circumference length) (a) shown in FIG. 6 is prepared and its both ends are punched to a shape (b') which is the unfolded shape of the contact line (b) between the side frame (12) and the down tube (13). After forming the flat plate (25') into a cylinder, butting ends (25a') are welded together. Thus, the vertical pipe (25) is manufactured. The vertical pipe (25) is provided with a jig hole (25b) and a water drain hole (25c) which are formed simultaneously with the punching of both ends. By the way as a matter of course, it is also possible to prepare a flat plate of a width wider than the circumferential length (a) and punched to the dimension (a) simultaneously with the punching of the right and left ends. The lateral pipe (26) is also manufactured in the same way as that of the vertical pipe (25).

Next, the steering mechanism of this embodiment will be described. A steering shaft (30) is inserted in the head pipe (5) and supported with bearings (31) disposed at the upper and lower ends of the head pipe (5), with the upper bearing (31) tightened and secured with two nuts (32) screwed onto the steering shaft (30). A front fork (33) is secured to the lower end of the steering shaft (30), with a front wheel (34) supported with a shaft at the lower end of the front fork (33).

Steering handlebars (35) are attached to the upper end of the steering shaft (30). The steering handlebars (35) are constituted with handlebars (37) of a generally U shape secured by tightening bolts to a handlebar holder (36) of an upper-lower, two-piece split structure comprising an upper holder (36b) and an under holder (36a). The under holder (36a) is made by forming a handlebar mounting seat (36d) integrally with a cylindrical fixing portion (36c) into which the upper portion of the steering shaft (30). The fixing portion (36c) is provided with a steering shaft insertion hole (38) with its inside upper portion formed with a female taper surface (38a). The outside upper portion of the steering shaft (30) is formed with a male taper surface (39) for fitting into the female taper surface (38a). A hemispherical key (40) in a key way (40a) secures the steering shaft (30) against rotation. A nut (41) is screwed onto the upper end of the steering shaft (30) to tighten and secure the under holder (36a).

The upper portion of the steering shaft (30) extends through a through hole (42) made in the upper mating surface of the leg shield (7) into a handlebar cover (43). The through hole (42) is made larger in diameter than the two nuts (32) and covered with a skirt portion of a handlebar cover (43) with a certain gap (a) shown in FIG. 8. The handlebar cover (43) is formed along the handlebars generally in a U shape in front view.

Right and left grips (44) of the handlebars (35) are respectively provided with a front disk brake lever (not shown) and a rear drum brake lever (45). The left grip (44) is also provided with a handle switch (46) for a horn switch and a turn signal switch. A front brake hose, handle switch leads, and others are routed inside the handlebar cover (43). A rear wheel brake cable (47) is routed front outside the handlebar cover (43) and along the down tube (13) within the front cover (6). The rear wheel brake cable (47) is supported for free forward and backward movement with a guide clamps (not shown) provided under the tilted portion (13a) and behind the straight portion of the down tube (13), and its further extended portion is secured to the front end portion of the power unit (3). Since the rear wheel cable (47) is routed outside the handlebar cover (43) with a large radius of curvature to avoid sharp local bends, frictional resistance during braking is reduced. Since the handlebar cover (43) is made compact, appearance is improved and, as will be described later, visibility of meters disposed on the front cover (6) is improved. Since the rear wheel brake cable (47) is routed along the down tube (13), and its rear end portion is secured to the power unit (3), forward and backward movement of the cable caused by up and down swing of the unit (3) is smoothly absorbed.

The power unit (3) comprises an engine proper (50) and a continuously variable transmission (CVT) (51) of a V-belt drive type connected to the engine proper (50) to form a single unit. A rear wheel (52) is supported through a shaft at the rear end of the power unit (3). The rear end of the power unit (3) also supports the lower end of a rear cushion (53) through a shaft. The upper end of the rear cushion (53) is supported with a bracket (54) through a shaft.

The engine (50) is a water-cooled four cycle single cylinder engine, comprising a crankcase (55), a cylinder block (56) with the cylinder tilted forward, and a cylinder head (57), piled up and joined together with bolts. A piston (58) is inserted for free sliding in a bore in the cylinder block (56) and connected through a connecting rod (59) to a crankpin (61) of a crankshaft (60). An intake port (62) and an exhaust port (63) are open to a combustion recess (57a) formed on the mating surface of the cylinder head (57), with both openings provided with an intake valve (64) and an exhaust valve (66), respectively. A cam shaft (66) for pressing and driving those valves is disposed above them and driven with the crankshaft (60) through a timing chain (67). An automatic tensioner (68) is provided for automatically adjusting the tension of the timing chain (67).

Referring to FIGs. 9, 10, 14, and 15, an exhaust pipe (48) is connected to the exhaust port (63) in the lower wall of the cylinder head (57), extends to the right outside and then to the rear of the vehicle body, and its rear end is connected to a muffler (not shown). A carburettor (49) is connected through an intake pipe to the intake port (62) in the upper wall of the cylinder head (57) and secured to the upper wall of the cylinder block (56) and connected to an air cleaner (not shown) disposed on a transmission case on the left side of the vehicle.

A dynamo (69) is mounted on the right end of the crankshaft (60). A drive pulley (70) of the CVT (51) is attached to the left end of the crankshaft (60). A ring gear (71) is installed in the dynamo (69) through a one-way clutch (not shown) and engages through a speed reduction gear (73) with an output gear (72a) of a starter motor (72) disposed on the upper surface of the crankcase (55).

A cooling water pump drive shaft (74) is disposed parallel to the crankshaft (60) in the lower part of the crankcase (55). An oil pump drive shaft (75) is disposed parallel to the crankshaft (60) between the drive shaft (74) and the crankshaft (60). A drive gear (76) is installed on the crankshaft (60), inside the ring gear (71) and on the opposite side of the drive pulley (70). The drive gear (76) engages through an idler gear (77) with a cooling water pump drive gear (78). The idler gear (77) is fixed to an oil pump drive shaft (75). An oil pump (79) is disposed in the central lower part in the crankcase (55) on the opposite side of the drive pulley (70). A cooling water pump (80) is disposed on the lower outside wall of the crankcase (55) on the drive pulley (70) side.

A rotary filter (82) for filtering foreign matter in lubrication oil is disposed between a bearing (81) on the right side of the crankshaft (60) and a crankweb (60a). In the right side portion of the crankshaft (60) are formed a main oil passage (83) extending in the axial direction, a first oil passage (84) running radially from the inner end of the main oil passage (83) to the inlet of the rotary filter (82), a second oil passage (85) extending obliquely from the outlet of the rotary filter (82) to the crankpin (61).

The lubrication oil route of the engine unit (50) is constituted as described below.

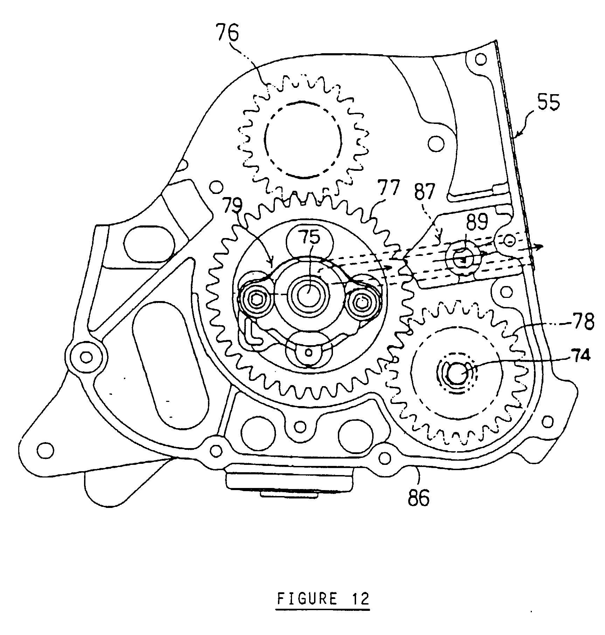

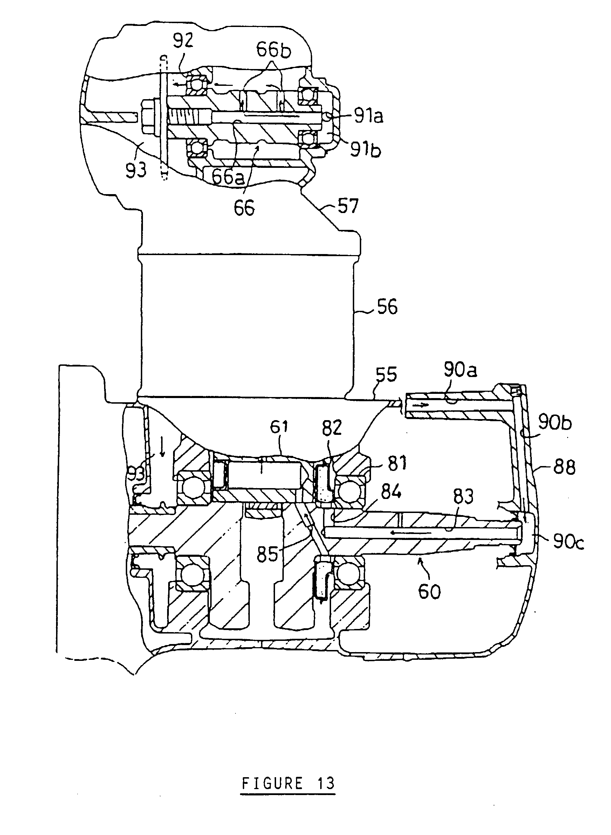

Lubrication oil drawn up from an oil pan (86) formed in the lower portion of the crankcase (55) with the oil pump (79) is sent under pressure to a main gallery (87) formed integrally in the crankcase (55) and there branched to a crankshaft route and a camshaft route. Through the crankshaft route, oil is sent under pressure from the main gallery (87) through an oil passage (89) formed integrally in the inner wall of the crankcase (55) and oil passages (90a, 90b) formed integrally in the outer wall of the crankcase cover (88) fitted to the right mating surface of the crankcase (55) to an oil chamber (90c). Oil is sent under pressure from the oil chamber (90c) through the main oil passage (83) in the crankshaft (60), and the first oil passage (84) to the rotary filter (82), and supplied from there through the second oil passage (85) and the crankpin (61) to the big end and piston sliding surfaces, and recovered into the oil pan (86). Through the camshaft route, oil is sent under pressure from the main gallery (87) through insertion holes (not shown) for cylinder head bolts fastening the cylinder and the cylinder head to the crankcase, and a lubrication oil hole (91a) of the cylinder head (57) to an oil chamber (91b). Oil is supplied from the oil chamber (91b) through oil holes (66a) formed in the axial direction, and (66b) formed perpendicularly to the axial direction in the camshaft (66) to the cam sliding surfaces, and through a bearing (92) of the camshaft (66) to a timing chain chamber (93), and then recovered to the oil pan (86) as shown with arrows in FIGs. 12 and 13.

As described above, since the rotary filter (82) is located between the crankweb (60a) and the right side bearing (81) of the crankshaft (60), the second oil passage (85) from the filter (82) to the crankpin (61) is formed as a single straight hole to reduce the number of oil passages to be machined and accordingly reduce the machining cost. In this connection, the rotary filter in conventional arrangement is placed outer side of the bearing, and therefore two oil holes are required for connecting the filter to the crankpin; one extending in the axial direction and the other in the direction normal to the axis.

The crankcase (55) is of a right-left, two-piece structure, with the left crankcase (55a) integrally formed with a transmission case body (94) constituting the inside wall of the transmission case. A transmission case cover (95) constituting the outside wall of the transmission case is secured with bolts to the mating surface of the case body (94). Thus, a belt chamber (V) is formed. The drive pulley (70) is disposed in the front part in the belt chamber (V) while a driven pulley (97) supported on a driven shaft (96) is disposed in the rear part in the belt chamber (V), with a V-belt (98) installed between the pulleys (70) and (97). An inside sheave (70a) of the drive pulley (70) is arranged to be moved in the axial direction by a centrifugal force acting on a weight (99). A centrifugal clutch (100) is attached to the left portion of the driven shaft (96). The driven shaft (96) is connected through an intermediate shaft (101) to a rear wheel shaft (102).

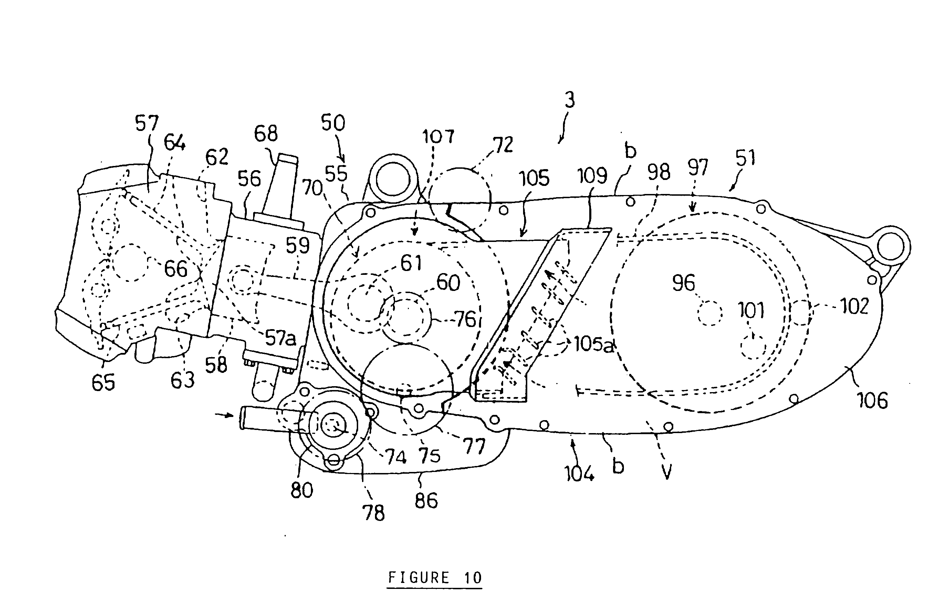

In the side view (FIG. 10), the upper and lower parts (b) between both pulleys (70) and (97) of the transmission case body (94) and the transmission case cover (95) bulge beyond the size necessary for installing the V-belt so that the V-belt does not comes in contact with the inside walls of those parts even if the V-belt moves up and down, preventing flapping noise from and damage to those parts.

A case cover (104) made of plastic is attached to the outside of the transmission case cover (95) to prevent noise produced within the case from coming out. The case cover (104) is made up of two pieces, a front cover (105) and a rear cover (106). The front part of the transmission case cover (95) is formed with a recess (95a) receding toward the drive pulley (70). The space between the recess (95a) and the front part of the front cover (105) forms a cleaner compartment (107). The recess (95a) of the transmission case cover (95) is provided with an inlet (103) for introducing cooling air into the belt chamber (V) from the cleaner compartment (107). A cleaner element (108) is held between the circumferential edge of the inlet (103) and the front cover (105). The front cover (105) and the recess (95a) are joined with bolts.

The rear end of the front cover (105) extends backward to cover the front outer side of the rear cover (106). The rear end of the extension is integrally formed with a suction inlet (109) for introducing cooling air into the cleaner compartment (107). The opening brim of the inlet (109) is integrally formed with a bifurcate mouse barrier (109a). The opening of the suction inlet (109) is provided with a plural number of ribs (105a) at vertical intervals with each rib tilted downward and formed integrally with the front cover (105). Thus, water and dust are prevented from entering through the suction inlet (109) into the cleaner compartment (107).

A radiator (116) is disposed in the front part of the body frame (2) and comprises a core section (116), tank sections (116b) placed on the right and left sides of the core section (116a), and an electric fan (117) behind the core section (116a). The radiator (116) is located behind the tilted (vertical side) portion (13a) of the right and left down tubes (13) and within the front part of a center tunnel (8a), to be described later, of the footboard. The tank sections (116b) of the radiator (116) are located to be superimposed on the tilted portion (13a) when seen from the front of the vehicle.

To the top of the right tank section (116b) is connected the lower end of a water supply hose (118). A water supply inlet (118a) at the top of the water supply hose (118) is provided with a radiator cap (119). To the lower end of the left tank section (116b) is connected the front end of a cooling water supply hose (120). The rear end of the cooling water supply hose (120) is connected to the suction inlet of the cooling water pump (80). The rear end of a return hose (121) is connected through a thermostat (80a) to the cooling water outlet formed at the top center of the cylinder head (57). The front end of the return hose (121) is connected to the upper end of the right tank section (116b). A recovery tank (122) for supplementing cooling water is disposed and secured to the straight portion (13b) of the right down tube (13).

A cooling hose (123) is connected to the cooling water outlet formed in the upper right part of the cylinder head (57) to supply part of the cooling water to the carburettor (49) to prevent it from malfunctioning by icing. A cooling water return hose (124) connected to the front central part of the carburettor (49) is further connected to the upstream side of the return hose (124). An air vent screw (115) is provided in the middle of a cooling water passage (not shown) of the carburettor (49). The screw (115) is located at the highest part of the cooling water passages of the radiator (116) and others.

The engine unit (50) is constituted as described below.

Cooling water drawn with the cooling water pump (80) from the radiator (116) flows the following route; from the underside of the cylinder block (56) to a water jacket (not shown) formed in the surrounding wall of the cylinder block, the water jacket formed in the cylinder head (57), the cooling water outlet of the cylinder head (57), the thermostat (80a), the return hose (121), and the tank section (116) of the radiator (116). And after being cooled in the core section (116a), the cooling water is again drawn with the cooling water pump (80). At the same time, part of the cooling water from the cylinder head (57) is supplied through the cooling hose (123) to the cooling water passage in the carburettor (49), flows around a throttle vale (not shown) and is discharged through the return hose (124) to the return hose (121).

Next, the body cover (1a) of this embodiment will be described in detail.

Running wind introduction openings (125) for introducing wind against the running vehicle are formed in the front right and left parts of the front cover (6) constituting the front body cover (6'). The brim of each of the introduction openings (125) is bent toward the rear of the vehicle to form an extension (125a) of a U-shaped cross section serving to increase the rigidity of the lower part of the front cover (6).

An inner fender (126) is disposed to face the introduction openings (125) in the front cover (6) and secured to a lower bracket (129), a front frame (131), and others.

The inner fender (126) is of a tunnel shape comprising right and left side walls (126a) and a top wall (126b). The front edge of the top wall (126b) is located over the extension (125a). The rear part of the top wall (126b) is bent down toward the radiator (116). The upper extension (9d) of the under cover (9) continues to the lower end of the top wall (126b). The upper extension (9d) is provided with running wind introduction openings (9e) for dual functions of a wind guide to introduce the wind against the running vehicle coming through the introduction opening (125) to the core section (116a) of the radiator (116) and a mud guard to prevent rain water and mud from entering the inside of the front cover (6).

A movable fender (34a) is located below the front cover (6) to cover the front wheel (34) from above. The running wind introduction openings (9e) are hidden behind the front wheel (34). The upper central part of the movable fender (34a) is formed with a downward directed fender recess (34b). Part of the underside of the front cover (6) opposite the fender recess (34b) is formed with an upward directed front recess (6b). Thus, an introduction passage (A) for introducing wind against the running vehicle is formed between the front recess (6b) and the fender recess (34b) so that running wind is introduced to the radiator (116) along the inner fender (126) and the upper extension (9d) of the under cover (9).

A horn (127) is located under the inner fender (126) and opposite the running wind introduction opening (125), and attached to a support member (128) which in turn is secured to a lower bracket (129) extending through the top wall (126b) of the inner fender (126) and welded to the head pipe (5). Thus, the sound of the horn (127) is emitted forward through the introduction opening (125).

As shown in FIG. 20, a cooling wind outlet (9b) is formed at part of the bottom (9d) of the under cover (9) behind the radiator (116). A wind guide wall (9c) extends from the rear edge of the outlet (9b) obliquely upward toward the upper part of the radiator (116) to guide cooling wind from the radiator (116) to the outlet (9b). Thus, the running wind supplied to the radiator (116) is drawn by negative pressure produced between the bottom (9d) of the under cover (9) and the ground, and sent out through the outlet (9b).

An upper bracket (130) projecting forward and the lower bracket (129) are respectively welded to the upper and lower parts of the head pipe (5). To the brackets (129) and (130) are secured the front frame (131) made of steel pipe and comprising a front frame (132) curved in a generally C shape in side view, and a rear frame (133) connected to the front frame (132). The front cover (6) is secured to the front frame (131) using bolts.

The front edge (6c) of the front cover (6) is formed to rise up in a generally U shape in front view. The lower edge (134a) of a windshield (134) is secured with bolts (134b) to and along the outer side of the upper edge (6c) to cover the front of a rider. A headlight (135) is installed in an opening (6d) formed in the front center of the front cover (6). Turn signal lights (136) are installed in openings (6e) formed in right and left upper parts of the front cover (6). Those lights (135 - 136) are located along the lower parts of the upper edge (6c) and secured with bolts to the front cover (6).

The windshield (134) and lights (135, 136) are disposed in the vicinity of areas (131a, 131b) where the front cover (6) is secured to the front frame (131). Though not shown, the positions and areas around them of the front cover (6) where various components are secured are formed thicker than other areas and furthermore provided with ribs. In this way, the windshield (134), lights (135, 136), and meters (137) are directly attached to the front cover (6) which is secured to the front frame (131), and the securing portion of the front cover (6) is located near the various components. Thus, the weight of various components is distributed to the front cover (6) and the front frame (131) to secure strength and rigidity. Furthermore, since various component are secured directly to the front cover (6), mating surfaces between the components and the front cover may be mated with high precision to improve appearance and ease of assembly work. That is to say, in the conventional structure, various heavy components are usually attached to the frame. Therefore, problems arise when the front cover is attached to the frame that the mating surfaces between the front cover and various components are prone to be displaced from each other due to dimensional errors in attachment work to make appearance poor, and that a longer time is required for the attachment work.

A maintenance opening (140) of a size which permits a human hand to be inserted is provided between the upper edge (6c) of the front cover (6) and the upper edge of the headlight opening (6d). Maintenance openings (141, 141) smaller than the opening (140) are formed in the right and left lower edge portions of the upper edge (6c). A detachable maintenance cover (trim cover) (142) made by bending a strip in a generally U shape is attached to the front surface of the front cover (6). The maintenance cover (142) covers the maintenance openings (140, 141) and the bolts (134b) at the lower edge (134a) of the windshield (134). Maintenance work such as replacing the bulb of the headlight (135), connecting or replacing wires of meters, etc. are made by removing the maintenance cover (142) and inserting hand and jigs through the maintenance openings (140, 141). Aiming work for the headlight is made by inserting a hand from under the front cover (6) (See FIG. 21).

The leg shield (7) is attached to an upper bracket (130) of the head pipe (5) and comprises a vertical wall portion (7a), a tunnel portion (7b) extending from the lower end of the vertical wall portion (7a), and foot portions (7c, 7c) extending right and left from the lower ends of the tunnel portion (7b) to form parts of the foot placing portions. The connection portions between the main frames (11) and the right and left side frames (12) are located within the tunnel portion (7b).

An inner panel (7h) is connected to the upper end of the vertical wall (7a), with the through hole (42) formed in the border portion between the inner panel (7h) and the vertical wall (7a). Meters (137) such as speedometer, tachometer, etc. are disposed on the inner panel (7h).

A recessed vertical attachment seat (7d) is formed near the center of the upper end of the vertical wall (7a) and a main switch (150) is attached to the attachment seat (7d). A shown in FIGs. 23(a) and 23(b), the attachment seat (7d) is provided with an insertion hole (7e).
Circumferential edge of the insertion hole (7e) is provided with a pair of integrally formed, engagement detents (7f) projecting toward the front of the vehicle. The main switch (150) comprises a key cylinder (150a), and a switch cap (151) for indicating the on and off positions of the cylinder (150a). The rear end of the key cylinder (150a) is supported with the upper bracket (130) of the head pipe (5). Thus, the key cylinder (150a) is secured to the same bracket to which the leg shield (7) is secured.

The switch cap (151) is constituted with a cylindrical body (151a) with its front end provided with an integral flange (151b), and with its rear end provided with a pair of integral projections (151c). The switch cap (151) is positioned with respect to circumferential direction and secured by fitting the inside circumference of the flange (151b) to the fitting portion (150b) integrally formed in the front part of the key cylinder (150a), and engaging an axially extending raised ridge (150c) with an axially extending engagement slit (151d) formed on the cylindrical body (151a). The flange (151b) is in contact with the circumferential edge of the insertion hole (7e) of the attachment seat (7d). The projection (151c) is in engagement with the engagement detents (7f). Thus, the switch cap (151) is secured to the attachment seat (7d) so that its axis is perpendicular to the attachment wall (7d), and its axial movement is prevented.

To indicate the keys witch positions, words ON, OFF, OPEN and LOCK are marked on the flange (151b) of the switch cap (151). Th scooter of this embodiment employs the constant lighting system in which the headlight is lit up when the key switch is turned to the ON position, and the seat lock is unlocked when the key switch is turned to the OPEN position. When the hand is removed from the key switch after turning it to the OPEN position, the key switch automatically returns to the OFF position. Therefore, with this embodiment, since the headlight is automatically turned off when the seat is opened, the battery is prevented from running down due to failure to turn off the headlight.

The leg shield (7) is provided with a storage compartment of the following structure: Part of the vertical wall (7a) of the leg shield (7) on the right of the vehicle width center is bulged forward to form an integral box-shaped trunk recess (152), and the left part of the vertical wall (7a) is cut out to form a trunk opening (153) into which a separately formed trunk member (154) is placed.

The left end of the front wall (152a) of the trunk recess (152) located in the front part of the vehicle is curve-formed to surround the rear side of the head pipe (5). The central part of the top wall (152b) is curve-formed to surround the underside of the main switch (150). A through hole (152d) is formed in the bottom wall (152c) of the trunk recess (152). The water supply inlet (118a) of the radiator (116) having a cap (119) extends through the through hole (152d) up to the inside of the trunk recess (152). The through hole (152d) is provided with a detachable cap (155) with its lower edge cut out in the axial direction to form engagement claws (155a) for engaging with the circumferential edge of the through hole (152d).

The opening of the trunk member (154) is formed greater than the trunk opening (153), and its lower edge (154a) is located below the lower edge of the trunk opening (153), its upper edge (154b) is located above the upper edge of the trunk opening (153), and its left edge (154e) is located outside the left edge of the trunk opening (153). The circumferential edge of the opening of the trunk member (154) is provided with an integrally formed flange (154c) which is provided with a plural number of integrally formed bosses (154d). Projections (156) integrally formed on the back surface of the leg shield (7) are fit into the bosses (154d) and their tips are welded to secure the trunk member (154) to the leg shield (7). The right edge of the trunk member (154) is joined by welding the projections (156) to the left edge of the trunk recess (152). Thus, the trunk member (154) and the trunk recess (152) are connected to each other to form a single body.

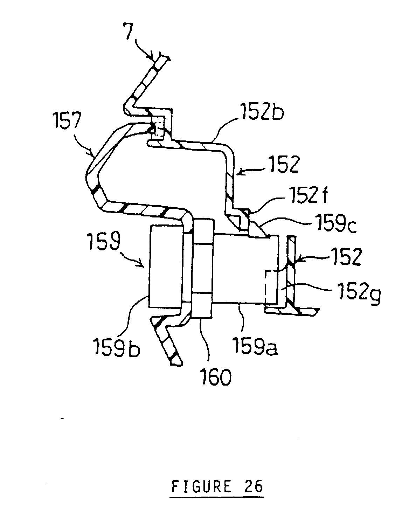

A lid (157) is provided to open and close the opening of the trunk recess (152) and the trunk opening (153). The lid (157) is supported for free swinging at its lower edge through hinges (158) attached to the lower edge of the opening of the trunk recess (152) and the lower edge of the trunk opening (153). A lock member (159) is disposed at the central upper edge of the lid (157). As shown in FIG. 26, the lock member (159) comprises a key cylinder (159a) secured to the lid (157) using a holder (159b) and a nut (160). The top wall (152b) of the trunk recess (152) is bent downward to form an engagement portion (152f) with a semicircular support recess (152g) formed behind the engagement portion (152f) through a cut-out hole. A lock detent (159c) of the key cylinder (159a) disengageably engages with the engagement portion (152f). The support recess (152g) restricts the circumferential movement of the key cylinder (159a).

As described above, since the storage compartment is arranged that the trunk recess (152) is provided with the lid (157) locked with a key, and the water supply inlet (118a) of the radiator (116) is disposed within the trunk recess (152), tampering by an unauthorized person is prevented and water supply work is made easy. With the conventional arrangement in this connection, if the water supply inlet is disposed within the body cover, the body cover has to be removed every time water is supplied, and a longer time is required. Furthermore, if the lid is provided on the body cover, a separate tamper-proof key is required. This adds to the cost and detracts from the appearance because the lid is visible from outside. Since the leg shield (7) constituting the trunk recess (152), and the water supply hose (118) of the radiator (116) are secured to the body frame (2), position accuracy between the water supply inlet (118a) and the insertion opening (152d) of the trunk recess (152) is improved.

The front end of the footboard (8) is connected to the lower end of the leg shield (7). The under cover (9) is connected to the underside of the footboard (8). The footboard (8) is integrally formed with the tunnel portion (7b), and right and left foot portions (7c, 7c) of the leg shield (7); a tunnel portion (8a) and foot portions (8b, 8b) continuously extending straight backward from the portions (7b, 7c, 7c). The right and left side frames (12) are disposed in the tunnel portion (8a). The straight portions (13b) of the down tubes (13) are disposed under the foot portions (8b).

The right foot portion (8b) of the footboard (8) is integrally formed with a downward bulging, box-shaped storage recess (161). The top opening of the storage recess (161) can be opened and closed with a lid member (162) engaging with and disengaging from a hook (163). The lid member (162) is formed flush with the foot portion (8b). A battery (164) is disposed in the center, electric components (165) such as fuses are disposed in the front part, and a filling inlet (122a) of the recovery tank (122) is disposed in the rear part, of the storage recess (161). A foot placing mat (not shown) is placed on the top surface of the foot portion (8b) to cover the lid member (162).

As described above, since the battery(164), electric components (165), and the filling inlet (122a) of the recovery tank (122) are disposed collectively within the storage recess (161), servicing work is made easy. Since the cap member (162) of the foot portion (8b) is covered with the mat and invisible from outside, appearance is improved and tampering is prevented. Since the storage recess (161) is formed integrally with the foot portion (8b), rigidity of that portion is increased. Since only the filling inlet (122a) of the recovery tank (122) is located in the storage recess (161) and the tank body is located outside the storage recess (161), the storage recess (161) and the lid member (162) are made small. In the conventional arrangement, since the battery and the electric components are located in scattered positions, the covers have to be removed every time of servicing, and the servicing work takes much time.

Part of the tunnel portion (8a) of the footboard (8) is cut out to form a storage opening (166) with its opening edge integrally formed with a stepped clown flange (166a). A separately formed storage compartment (167) is removably inserted into the opening (166). An integrally formed flange portion (167a) of the storage compartment (167) is tightened and secured together with the footboard (8) and the side cover (10) using bolts (167b). The storage opening (166) is provided with a lid (168) to be freely opened and closed with its front end connected through a hinge and with its rear end provided with a lock member (168a) with a key. The lid (168) is flush with the tunnel portion (8a).

With the storage compartment (167) removed, the engine unit (50), the electric fan (117) of the radiator (116), etc. can be accessed through the storage opening (166) for servicing. Since the storage compartment (16) is tightened together with the side cover (10), a smaller number of parts suffice for the attachment.

The front end of the side cover (10) is connected to the rear end of the footboard (8). Above the side cover (10) is disposed the seat (4) comprising, as described later, a front seat (4a), a rear seat (4b) which is higher than the front seat (4a), a bottom plate (4c), a cushion (4d) placed on the bottom plate (4c), and a leather (4e) covering the cushion (4d). The side cover (10) is of a three-piece structure comprising right and left pair of lower side covers (170), a right-left integrated upper side cover (171), and a right-left integrated front side cover (172). The lower side covers (170) cover right and left sides of the power unit (3) and the upper side of the rear wheel (52). Foot placing portions (170a) for the rider on the rear seat are located between the lower side covers (170) and the front part of the upper side cover (171). The upper side cover (171) extends obliquely upward to cover the underside of the rear seat (4b) of the seat (4). The rear end surface of the upper side cover (171) is provided with a marker light (171a) in which a tail lamp, a stop lamp, and turn signal lamps are integrated. The front side cover (172) covers the underside of the front seat (4a) of the seat (4) and tightened in position together with the footboard (8).

A storage compartment (174) is disposed under the rear seat (4b) and in the side cover (10). The storage compartment (174) is of the size and shape for storing a helmet or the like, spanning the distance between the rear frames (15), and secured with bolts. The opening brim (174a) of the storage compartment (174) is covered with the bottom plate (4c) of the seat (4). The bottom wall (4c) portion facing the opening brim (174a) is bulge-formed upward to secure the room for the top of the helmet.

As shown in FIG. 30(a), an integral groove (175) is formed in the upper edge of the upper side cover (171) to extend in the front and rear directions, and sloped down forward and receive a seat edge portion (4d). The groove (175) is formed by bending and extending the upper edge of the outer surface (175a) downward and further extending to form an integral seal portion (inner wall) (175c) surrounding the opening brim (174a) of the storage compartment (174) from above. A weather strip (176) attached to the bottom plate (4c) of the seat (4) is in contact with the top surface of the seal portion (175c) so that the gap between the seat (4) and the upper side cover (171) and the storage compartment (174) is sealed. The outer wall portion (175b) of the groove (175) covers outer side, from the longitudinal center to the rear, of the side edge portion (4d) of the seat (4). The lower edge of the side edge portion (4d) is located in the groove (175b). The inner wall (175d) of the groove (175) covers the outer side of the opening brim (174a) of the storage compartment (174).

As shown in FIGs. 30(b) and 33, the rear part of the upper side cover (171) is provided with a grab bar (173) made of aluminum die cast. The grab bar (173) is of a generally U shape surrounding right and left sides of the rear seat (4b), and has an outer wall (173b) constituting part of the groove (175) and a bottom wall (173c) extending inward from the lower end of the outer wall (173b), with its outer surface (173a) continuing to the outer surface (175a) of the side cover (171). An integral cross member (173d) is formed to connect the right and left rear parts of the outer wall (173b) to each other. The bottom wall (173c) formed integrally with the front part of the outer wall (173b) is secured with bolts to the longitudinal middle portion of the support pipe (16) through a bracket (176). The right and left ends of the cross member (173d) are secured to the rear ends of the support pipes (16) through a bracket (178) using bolts. A lock device (17) for the seat (4) is secured in the vehicle width center of the cross member (173d).

Part of the side cover (171) which overlaps with the grab bar (173) is recessed inward so that the outer surface of the upper side cover (171) is flush with the outer surface of the grab bar (173). The outer wall (173b) of of the grab bar (173) covers the side edge (4d) of the seat (4), and the lower edge of the side edge (4d) faces the bottom wall (173c).

As shown in FIGs. 31 and 32, a helmet holder (180) is formed integrally with the rear end of the outer wall (173b) of the grab bar (173) by cutting off part of the outer wall (173b). By hooking a hook (181a) of a helmet (181) on the holder (180), the helmet is prevented from being stolen, rain water is prevented from entering the helmet, and the side cover (10) is prevented from being damaged. That is to say, the helmet in the state of being hooked is in contact with the metallic grab bar (173) and less likely to come in contact with the side cover (10). Since the helmet opening faces downward, the side cover (10) is not damaged and rain water does not enter the inside of the helmet (181). Since the holder (180) is formed integrally with the grab bar (173), costs are reduced. Conventional structure in which the holder is provided on the upper edge of the side cover has problems that the helmet comes in direct contact with the side cover and that it tends to face upward.

As shown in FIG. 34, a rear carrier (182) with a box (183) on it is attached to the rear upper part of the seat (4). The carrier (182) comprises a rectangular pipe loop (182a) reinforced with a plural number of bridging plates (not shown) and is supported with a first support member (184) secured to right and left rear ends of the pipe (182a) and a second support member (185) secured to right and left central parts of the pipe (182a). The second support pipe (185) is secured with bolts to the rear end inner wall of the grab bar (173) through a bracket (186). The first support pipe (184) is connected to a frame pipe (187) provided between the brackets (178) provided on the support pipes (16).

The front end of the carrier (182) is extended to be located above the rear end top surface (173f) of the grab bar (173). A detachable backrest (188) for the rear seat is attached to the extended portion (182b). Both ends in the vehicle width direction of the backrest (188) have projecting legs (189) attached to the extended portion (182b). In this embodiment, since the rear carrier (182) is secured to the support pipe (16) constituting the vehicle frame (2) and to the grab bar (173) secured to the pipe (16), the structure is simpler in comparison with for instance conventional arrangement in which the backrest is attached through an attachment stay to the vehicle frame, or to the seat. Furthermore, since an extra space for attachment is made unnecessary, the space in the side cover is made large. Since the backrest (188) can be easily removed and, when removed, the extended portion (182b) is utilized as the carrier space and since no signs are left after the removal, appearance is prevented from becoming poor.

Next, the seat device of this embodiment will be described.

The rear end of the front seat (main seat) (4a) of the seat (4) is formed with a stepped up rear seat (tandem seat) (4b), and a vertical wall (190) is formed in the border area between both seats (4a) and (4b). The vertical wall (190) is provided with a front backrest (191) for supporting the hip of the rider to improve riding comfort, and is adjustable in front and rear directions according to the size of the rider.

A projecting portion (192) is integrally formed in the vehicle width central portion of the vertical wall (190) to project forward. The back side of the backrest (191) is formed with a recess (191a) to face a front surface (192a), right and left side surfaces (192b), and a top surface (192c) of the projecting portion (192). The projecting dimension is set slightly greater than the maximum forward shift distance of the backrest (191) shifted with a shift adjustment mechanism described later. Thus, the gap produced by forward shift of the backrest (191) between the back surface of the backrest (191) and the vertical wall (190) is filled.

The shift adjustment mechanism (193) is constituted as described below.

A frame plate (194) surrounding the back side of the backrest (191) is provided with an attachment stay (195). The attachment stay (195) comprises a main plate (195a) extending in the vehicle width direction, and stay plates (195b) integrally extending from right and left ends of the main plate (195a) backward. The main plate (195a) is secured with bolts to the frame plate (194). Since the frame plate (194) is surrounded with the recess (191a), rigidity of the backrest (191) is increased to improve stabilized feeling when the hip is supported.

Right and left end portions of the projected portion (192) are formed with guide holes (196) into which the stay plates (195b) may be inserted. Inside each guide hole (196) is formed a square tubular guide portion (197) with its bottom formed with right and left end portions (4c') of the bottom plate (4c), with its side and top portions formed with a U-shaped guide member (198), and with a plural number of reinforcement ribs (198a) integrally formed on the outside surface of the guide member (198). Bolt holes (199) are formed through right and left end portions (4c'), opposite the stay plates (195b), of the bottom plate (4) at specified intervals in the shift direction. The stay plates (195b) are secured with bolts (200) inserted through the bolt holes (199). Thus, the front parts of the stay plates (195b) of the backrest (191) are supported with the guide portions (197), and the rear parts are secured with bolts (200). Here, the front wall portion of the bottom plate (4c) constituting the top wall of the storage compartment (174) extends halfway along the front surface (192a) of the projecting portion (192). From there the vehicle width central portion is bulged upward, and only the right and left side portions (4c') are formed horizontally to avoid interference with the helmet top.

With the shift adjustment mechanism (193), the attachment stay (195) is secured to the backrest (191), the projecting portion (192) of the seat (4) is provided with the guide portions (197), the stay plates (195a) are inserted into the guide portions (197), and the rear ends of the stay plates (195a) are secured with bolts (200). Therefore, the position of the backrest (191) may be adjusted simply by removing and attaching the bolts (200). Since the mechanism is constituted simply with the stay (195) and the guide portions (197), the number of parts is reduced to a minimum and costs are reduced accordingly. Since the cushion thickness is not reduced, riding comfort is not affected.

A seat hinge (205) is attached to the front lower end of the seat (4) so that the seat (4) may be swung up and down about the hinge (205). The seat hinge (205) comprises an elevated arch-shaped bracket (206) straddling the right and left side frames (12), and a hinge bracket (207) secured to the bracket (206). A support bracket (208) is secured to the front lower end of the seat bottom plate (4c). Both brackets (207) and (208) are connected with a hinge pin (209). A U-shaped lock member (210) is secured to the rear lower end of the seat (4) for locking and unlocking with the lock device (179).

The support bracket (208) as shown in FIG. 46 is tilted so that its right side (left side in the drawing) is raised relative to the horizontal line (B). Though the hinge pin (209) is horizontal, the seat (4) is tilted so that the right side of the seat (4) is raised in its closed position because the right side of the support bracket (208) is raised. The reason for such an arrangement is that a seat gas damper (225) to be described later is disposed slightly to the right of the vehicle body and there is possibility of the right side becoming lower when the seat is open, which should be avoided. When the seat (4) is closed, it is locked with the lock device (179) and the right-up tilt is corrected to generally horizontal position.

The vehicle width central portion of the front end of the front seat (4a) of the seat (4) is bulged upward as a bulged portion (4e) to serve as a knee grip to be held between the rider's legs.

A fuel tank (211) is secured to the vehicle frame (2) under the front seat (4a) of the seat (4). A fuel filler inlet (211a) projects from the front upper part of the tank (211) and is provided with a detachable filler cap (212). A filler opening (213) is formed on the front end surface of the bulged portion (4e) of the seat (4). The filler opening (213) is made by tilting up the front end (214) of the bottom plate (4c) of the seat (4). Here, though the cushion (4d) becomes thin in the area where the front end (214) is tilted up, since the rider's body does not come in contact with this area, riding comfort is not affected. The bulged portion (4e) is formed by the upward tilt described above.

The filler opening (213) is provided with a fuel lid (215) for covering and uncovering the opening. The fuel lid (215) comprises an inner panel (216) and an outer panel (217) both made of sheet metal. The lower part of the inner panel (216) is secured with bolts (218) to the support bracket (208). The upper part of the inner panel (216) is secured with bolts (219) to a rib (214a) formed integrally with the front end (214) of the bottom plate (4c). The lower edge of the outer panel (217) is hinged for free opening and closing with a hinge pin (220) to the lower edge of the inner panel (216). A lock member (221) is attached to the upper end of the inner panel (216) for locking and unlocking the outer panel (217).

The inner panel (216) is formed with an opening (216a) with its brim bent and extended inward in a cylindrical shape. The filler inlet (211a) of the tank (211) is placed inside the opening (216a). A duct (222) is installed between the filler inlet (211a) and the opening (216a) of the inner panel (216) to prevent fuel from overflowing outside. Fuel which has overflown in the duct (222) is recovered through a tube (223).

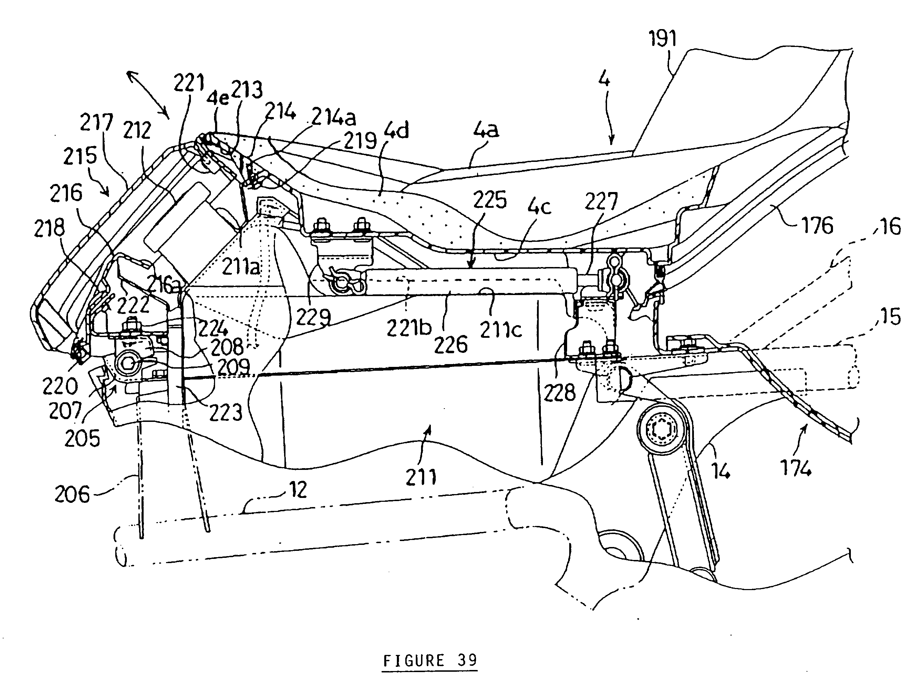

To mount the seat (4) on the vehicle frame (2), first the lock member (210) of the seat (4) is locked and positioned to the lock device (179) secured to the grab bar (173), and the seat (4) is secured with bolts (224) (Refer to FIGs. 33 and 39) while positioning the front end of the seat (4) on the support bracket (208) of the seat hinge (205). In this way, since the filler opening (213) is formed on the front end of the seat (4), and the hinge (205) is located near the lower part of the opening (213), the seat mounting work is made with good right-left and front-rear positioning accuracy, good mating accuracy of the seat (4) relative to the side cover (10) and the grab bar (173), and to the sealing surface of the storage compartment (174). As a result, mating surface between the seat (4) and the side cover (10) is made tight to form a vehicle body free from gaps or displacements between components and to improve appearance. That is to say, a problem in the conventional arrangement is that, since the seat cannot be mounted in the state of the lock member at the seat rear end being positioned, mating accuracy between the seat and the side cover is not good and a gap is likely to occur between the two components.

The gas damper (225) is disposed between the seat (4) and the vehicle frame (2) to alleviate the effort in opening and closing the seat and to hold the seat in the opened position when it is opened. The damper (225) comprises a cylinder (226), a piston (not shown) inserted for free sliding in the cylinder (226), a piston rod (227) with its one end connected to the piston, and the other end of the piston rod (227) projecting from the cylinder (226).

The damper (225) is disposed generally horizontally in the longitudinal direction along th bottom plate (4c) between the top wall (211b) of the tank (211) and the bottom plate (4c). A recess (211c) is formed in the vehicle width central portion of the top wall (211b) of the tank (211) to extend in the longitudinal direction and accommodate the damper (225). The piston rod (227) of the damper (225) is rotatably connected to a bracket (228) secured to the front end of the rear frame (15). The cylinder (226) is rotatably connected to a bracket (229) secured to the underside of the bottom plate (4c) of the cylinder (226). One end of the piston rod (227) connected to the seat is located nearer to the seat hinge (205) located toward the front of the vehicle body than to the other end of the piston rod (227) connected to the vehicle body, and above the hinge (205).

Next, the stand device of the motorcycle (1) will be described in reference to FIG. 42.

A single-legged side stand (not shown) is provided in the middle of the straight portion (13b) of the down tube (13). A main stand (235) is provided at the rear end of the straight portion (13b) of the down tube (13). The main stand (235) comprises a stand proper (236) comprising right and left legs (236b) and (236a), a hinge bracket (237) connected to the stand proper (236), and a pedal member (238) connected to the left leg (236a). The hinge bracket (237) is connected through a hinge pin (241) to a bracket (240) of a stand frame (239) bridging the right and left straight portions (13b) in a downward curved shape. Thus, the stand proper (236) may be swung between an upright position (A) and a retracted position (B) in contact with the underside of the crankcase (55) of the power unit (3).

A spring (not shown) is provided between the stand proper (236) and the bracket (240) to urge the former constantly in the retracting direction. A stop member (242) is provided on the bracket (240) to restrict the swing of the stand proper (236) in the upright position (A). The part of the hinge bracket (237) that comes in contact with the stop member (242) is formed with an integral projection (243) of a wide width.

Both legs (236a) and (236b) of the stand proper (236) are connected to each other through a cross bar (244) which is curved downward in the retracted position (B). A rubber roller (245) for coming into contact with the underside of the crankcase (55) is provided in the vehicle width central portion of the cross bar (244). The rubber roller (245) is supported for free rotation on a pin (247) across right and left support plates (246a) and (246b) secured to the cross bar (244).

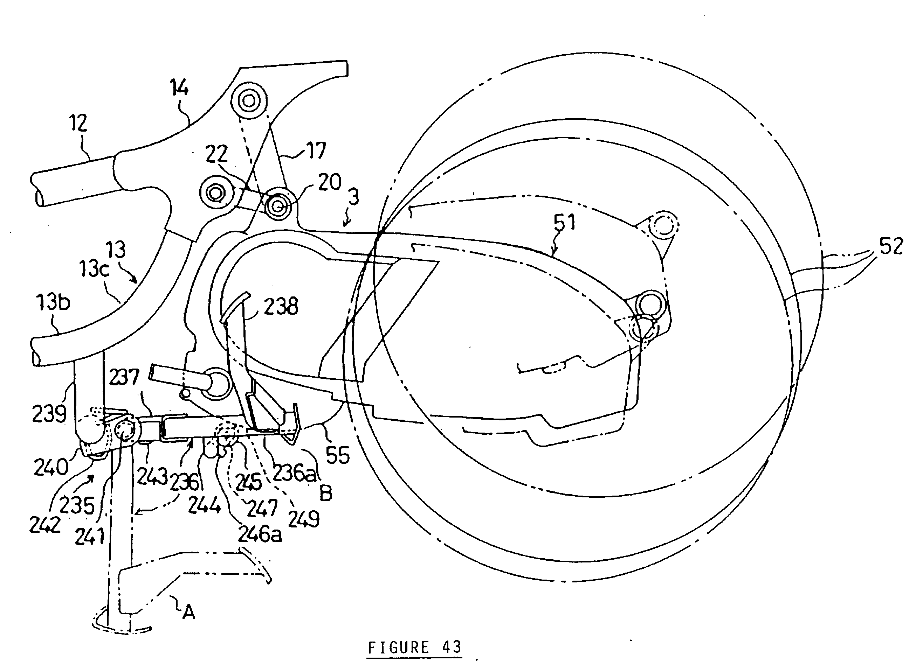

The part of the power unit (3) with which the roller (245) comes into contact is formed as a thickened portion (248). The thickened portion (248) is formed with a follow-up surface (249) of a curved profile to restrict the decrease in the road clearance of the stand proper (236) according to the up and down swing of the power unit (3). To describe specifically in reference to FIG. 47, the surface (249) is curved up forward relative to the arc (C) of the radius of the distance from the pivot shaft (20) of the power unit (3) to the contact point of the rubber roller. That is to say, when the power unit (3) swings from the static position (shown with solid lines in FIGs. 43 - 45) to the most extended position (shown with dash-and-dotted lines in FIGs. 43 - 45) and to the most sunken position (shown with dash-and-double-dotted lines in FIGs. 43 - 45), the stand proper (236) swings to the direction of restricting the decrease in the road clearance due to the vertical swing of the power unit (3), namely upward, to avoid the decease in the bank angle (θ').

The follow-up surface (249) is conceptually shown in FIG. 47. The portion of the follow-up surface (249) forward of the roller contact point is above the arc (C) while the portion behind the roller contact point is below the arc (C).

Function and effect of this embodiment will be described next. The vehicle frame (2) of this embodiment comprises a head pipe (5), the main frame (11) connected to the upper part of the main frame (5), paired right and left side frames (12, 12) connected to the rear end of the main frame (11) and extending backward, paired right and left down tubes (13, 13) connected to the lower part of the head pipe (5), and a suspension bracket (14) which joins together the curved portions (13c, 13c) of the down tubes (13, 13) and the rear end portions (12a, 12a) of the side frames (12, 12). As a result, rigidity of the vehicle frame employed in the large sized scooter is secured.

Furthermore, since a single main frame (11) is connected to the head pipe (5), larger vacant spaces are made available around the head pipe in comparison with the structure in which two main frames are connected. This makes a larger space available for storage within the leg shield. Furthermore, since foot placing portions are formed with the straight portions of the right and left side frames (12) and the straight portions (1c) of the right and left down tubes (13), a large capacity of storage compartment (167) is disposed in the tunnel portion of the footboard (8).

Since the curved portions of the side frames (12) and the down tubes (13) are connected to each other through the vertical pipes (25), rigidity of the frame is further increased. Furthermore, since the suspension links (17) are connected to the upper part of the suspension bracket (14) where the side frames (12) are connected, and the compression rods (22) are connected to the lower part of the suspension bracket (14) and the power unit (3) is supported with the area where both components (17, 22) are connected to each other, rigidity of supporting the power unit (3) is increased.

According to the manufacturing method of the vertical pipe (25), both ends of a flat sheet metal (25') having an unfolded circumferential dimension (a) are punched in the unfolded shapes (b') of the contact surfaces (b) formed when the vertical pipe (25) comes in contact with the side frame (12) and the down tube (13), the flat sheet metal (25') is rolled round, and butting ends (25a') are welded together. As a result, when the vertical pipe (25) is butt-welded at the contact surface (a) to the side frame (12) and the down tube (13), accuracy of mating surfaces is improved, and attachment accuracy is improved in comparison with the conventional process in which a pipe ends are cut and processed to form curved surfaces. Furthermore, since the jig hole (25b) and the water drain holes (25c) are formed simultaneously with the punching of the flat sheet metal (25'), unlike conventional process, the hole making process is unnecessary and cost are reduced accordingly.

The steering device of this embodiment is constituted such that the top of the steering shaft (30) projects out through the through hole (42) of the front cover (6), and the handlebar holder (36) of the steering handlebars are attached to the projecting portion. Therefore, ease of attachment work and servicing around the handlebars (35) are improved because the handlebars (35) may be removed without removing the front cover (6). Furthermore, since the nut (41) is screwed to the top end of the steering shaft (30) and the handle holder (36) is secured by tightening the nut (41), unlike the conventional structure, welding or providing a projection for a bolt attachment portion is made unnecessary, and cables are prevented from being damaged by contact with those components.

Since the handlebar holder (36) is formed with the female taper surface (38) into which the male taper surface (39) of the steering shaft (30) is fit, tightening strength in the large sized scooter is improved and rigidity of the heavy vehicle body is secured. In comparison with the conventional arrangement in which two members of a front fork are extended up and joined together, a larger storage space is provided.

Since the through hole (42) of the front cover (6) is made larger in diameter than the two nuts (32), ease of servicing work is further improved; attachment and removal of the nuts (32) are easily made through the through hole (42) and therefore attachment and removal of the front fork (33) and the steering shaft (30) are made without removing the front cover (6). Furthermore, since the through hole (42) is covered with the underside of the handlebar cover (43) and invisible from outside, appearance is prevented from becoming poor.

In the engine unit (50) of this embodiment, since the drive gear (76) of the crankshaft (60) is connected through the idler gear (77) to the cooling water pump drive gear (78) so that the oil pump drive shaft (75) is driven with the idler gear (77), an oil pump drive gear is omitted. Thus, the number of parts is reduced to make the engine unit compact.

Furthermore, since the oil pump (79) is driven with the idler gear (77), the gear ratio of the oil pump gear (79) is chosen irrespective of the speed reduction ratio of the cooling water pump (80). This also results in the compact size.

Furthermore, the structure described above makes it possible to position the oil pump (79) on the opposite side of the drive pulley (70) and in the central lower part of the crankcase (55), and position the lubrication oil suction inlet in the central lower part of the oil pan (86). As a result, the oil passage is simplified and the oil pump is prevented from failing to draw oil by drawing air when the oil level varies.

Furthermore in the cooling device for the CVT (51) of this embodiment, since the cleaner compartment (107) is formed with the recess (95a) formed in the front part of of the transmission case cover (95) and with the front cover (105), and the suction inlet (109) for introducing cooling air is formed in the rear end part of the front cover (105), the cleaner compartment (107) is formed with existing components and, unlike the conventional arrangement in which a separate cap and partition plate are employed, the number of components is reduced, the structure is simplified, and costs are reduced. Furthermore in this case, since the recess (95a) is formed in the transmission case cover (95), rigidity of the transmission case cover (95) is increased accordingly to restrict vibration and noise from being produced.

Since the front cover (105) and the transmission case cover (95) are tightened together and secured so as to sandwich the cleaner element (108), replacement or cleaning of the cleaner element (108) is made simply after removing the front cover (105).

Since the suction inlet (109) of the front cover (105) is open opposite to the advancing direction, water and dust are less likely to enter in comparison with the arrangement in which the suction inlet is provided on the front side of the vehicle body, and furthermore, since the suction inlet (109) is provided with the rat barrier (109a) and the rib (106a), water and dust are further prevented from entering to extend the life of the cleaner element (108).

According to the layout structure of this embodiment, since the radiator (116) is disposed in the front part of the center tunnel (a) of the footboard (8), running wind is securely introduced, and it is disposed by utilizing the vacant space in the center tunnel (8a). As a result, degree of freedom in laying out components in the cover is increased in comparison with the conventional layout in which the radiator is disposed in the front vehicle body cover. Since it is laid out near the engine unit (50), the water supply hose (118) and the return hose (121) are made shorter and water resistance is reduced. From this point too, cooling efficiency is improved. Since the center tunnel (8a) serves to draw out air, and air passage is made wide, cooling effect is further improved.

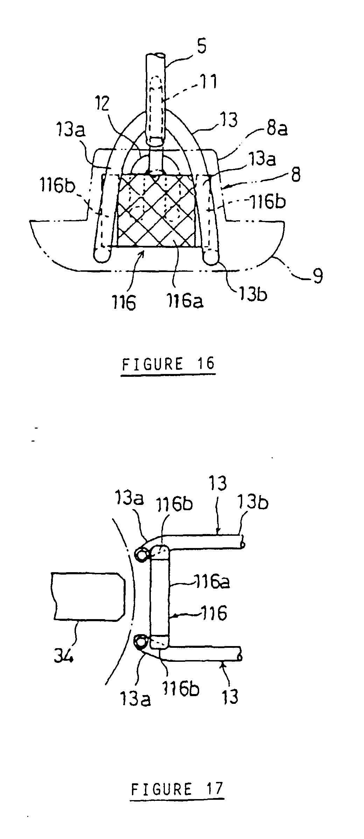

Since the radiator (116) is positioned behind and between the tilted (vertical) portions (13a) of the right and left down tubes (13), is is positioned without interfering with the turning locus of the front wheel (34) (shown with a dash-and-dotted line in FIG. 17). As a result, the wheelbase can be shortened or if the wheelbase is left unchanged, the foot placing portions may be enlarged in the front and rear directions. Furthermore, the front surface of the radiator (116) is protected with the right and left down tubes (13) against damage by external forces, and the ground clearance is secured.

Since the right and left tank sections (116b) of the radiator (116) are placed over the tilted portions (13b) of the down tubes (13), vertical dimension of the core section (116a) may be set large to increase cooling efficiency without increasing the distance between the down tubes (13, 13), namely the vehicle width.

The carburettor (49) is positioned above the engine unit (50), cooling water (hot water) is supplied from the engine to the carburettor (49), and the air vent screw (115) is provided at the highest position of the entire cooling water passage. Therefore, air venting work is improved in comparison with the conventional arrangement in which hoses are removed and attached again; air collected in the cooling water passage is easily vented while preventing icing.

According to the running wind introduction structure, the running wind introduction openings (125) are provided on the front right and left sides of the front cover (6), and the inner fender (126) and the upper extension (9d) of the under cover (9) are provided for introducing running wind from the introduction openings (125) to the radiator (116). This structure has effects of reducing air resistance, smoothing air flow, improving appearance, and improving efficiency of cooling air introduction to the radiator (116). The extension (125a) continuing from the introduction openings (125) reinforces and increases rigidity of the lower part of the front cover (6).

Since the horn (127) is positioned within the inner fender (126) to face the introduction opening (125), large volume of the horn sound is emitted. In comparison with the conventional structure in which horn slits are separately provided, water is prevented from entering the upper part of the front cover (6) and appearance is prevented from becoming poor.

Since the discharge outlet (9b) of the under cover (9) is formed behind the radiator (116) and the the wind introduction wall (9c) is formed to rise obliquely forward from the rear edge of the discharge outlet (9b) toward the radiator (116), air discharging efficiency is improved by utilizing negative pressure produced under the rear part of the under cover (9) and the amount of air flow to the radiator (116) is increased. Since the discharge outlet (9b) and the wind introduction wall (9c) are invisible from outside, appearance is prevented from becoming poor. Furthermore, since the wind introduction wall (9c) is provided, the engine unit (50) is prevented from being influenced by the discharged air heat and from being soiled with mud and water.

According to the body structure of this embodiment, since the maintenance opening (140) is formed between the upper edge (6c) of the front cover (6) and the upper edge of the headlight opening (6d), and the maintenance opening (140) and the lower edge (134a) of the windshield (134) are covered with the maintenance cover (142), ease of maintenance work is improved; replacement of the bulb of the headlight (135) and wire connections of meters are made through the maintenance opening (140) without removing the front cover (6). Thus, work efficiency is improved.

Here, since the maintenance opening forming portion of the front cover (6) is sloped up rearward, the projected area in plan view of the maintenance opening, namely the effective area for doing maintenance work from above, is increased to improve ease of the work.

Since the attachment bolts (134b) at the lower edge (134a) of the windshield (134) are covered with the maintenance cover (142) which may be decorated with a design pattern to enhance design effect, appearance may be improved.

According to the main switch attachment structure of this embodiment, the insertion hole (7e) formed in the attachment seat (7d) of the leg shield (7), the engagement portions (7f) are integrally formed on the circumference of the insertion hole (7e), the flange portion (151b) of the switch cap (151) is brought into contact with the circumference of the insertion hole (7e), and the projections (151c) of the cylindrical body (151a) are made to engage with the engagement portions (7f). As a result, longitudinal gap between the switch cap (151) and the attachment seat (7d) of the leg shield (7) is eliminated to improve appearance.

Since the key cylinder (150a) and the leg shield (7) are secured to the same vehicle body bracket, attachment dimension error is reduced. This is another factor of reducing the axial gap between the switch cap (151) and the attachment seat (7d) of the leg shield.

Since the insertion hole (7e) is made larger In diameter than the cylindrical body (151a) of the switch cap (151) and the engagement portions (7f) are made resilient, error between insertion hole (7e) and the switch cap (151) in the direction normal to the axis is absorbed.

According to the storage device of this embodiment, the trunk recess (152) is integrally formed by bulging the right side portion with respect to the vehicle width direction of the vertical wall (7a) of the leg shield (7) toward the front of the vehicle, and the trunk opening (153) is formed by cutting out the right side portion. As a result, the volume of the trunk is considerably increased. Since the lower edge (154a) of the trunk member (154) is located below the lower edge of the trunk opening (153), and the upper edge (154b) is located above the upper edge of the trunk opening (153), stored objects are prevented from falling out while increasing the trunk volume.

The lid (157) to which the lock member (159) is attached is disposed at the trunk opening (153) and opening of the trunk recess (152). The engagement portion (152f) for engagement with the lock detent (159c) of the lock member (159), and the support recess (152g) for supporting the rear end of the lock member are integrally formed with the trunk recess (152) of the leg shield (7). As a result, the lock member (159) is supported with the leg shield (7) to increase the locking strength, and position accuracy between the lock detent (159c) and the engagement portion (152f) is improved so that locking is reliably made over a long period of use.

While the separate trunk member (154) is disposed in the left portion only of the leg shield (7) in the above embodiment, the entire storage portion may be constituted with a separate trunk member. In that case, the trunk volume is further increased.

According to the side cover structure of this embodiment, the upper end portion of the upper side cover (171) is formed with the receiving portion (175) as a recess extending in the front and rear directions, the side edge portions (4d) of the seat (4) are covered with the outer wall portion (175a) of the receiving portion (175), and the opening edge (174a) of the storage compartment (174) is covered with the seal portion (175c) of the inner wall portion (175b). As a result, tamper or theft is prevented because the space under the seat (4) is not accessible by hand. Since the receiving portion (175) and the side edge (4d) of the seat (4) constitute a labyrinth, rain water or vehicle washing water is prevented from entering the inside of the storage compartment (174). Since the receiving portion (175) is sloped down toward the front of the vehicle, rain water or washing water, even if it enters the inside, can be easily drained.

Since the grab bar (173) is disposed in the rear part of the upper side cover (171) so as to cover the side edge portion (4d) of the seat (4) with the outer wall (173a) of the grab bar (173), and the outside surfaces of the grab bar (173) and the side cover (171) are arranged to be flush with each other, tampering and water entry are prevented. Such an arrangement also improves ease of riding and getting off the vehicle and appearance because the outside surface of the vehicle is continuous and free from obstacles.

According to the seat device of this embodiment, the projection (192) is integrally formed at the vertical wall portion (190) at the rear end of the front seat (4a) of the seat (4), and the recess (191a) of the size to surround the projection (192) is formed on the back side of the backrest (191). As a result, when the backrest (191) is shifted, the gap between the back side and the vertical wall portion (190) is filled with the projection (192) to improve appearance and to prevent cost from rising due to a separate cover to conceal the gap. Furthermore, since the projection (192) is formed on the vertical wall portion (190) side of the seat (4), the backrest is prevented from widening sideways as in the case of providing the projection on the backrest side, riding posture of the rider is stabilized, lower part of the space behind the vertical wall portion (190) is not reduced, and the volume of the storage compartment (174) is not affected.

According to the fuel supply structure of this embodiment, the fuel supply opening (213) is provided on the front end surface of the seat (4) by forming the front end (214) of the bottom plate (4c) of the seat (4) to rise up, and by tilting the right and left sides of the bottom plate (4c). The opening (213) is provided with the fuel lid (215) for opening and closing the opening. As a result, fuel can be supplied without opening and closing the heavy seat (4). Since the fuel supply inlet (211a) is located at the front end of the seat (4), riding comfort is not affected even if the thickness of the cushion in the front end portion (214) is reduced, knee grip function is provided, the space inside the seat is effectively used, and a required amount of fuel is secured without increasing the seat height. Furthermore, since the seat hinge (205) disposed at the front lower part of the seat (4) is secured to the front lower part of the vehicle frame, attachment positioning of the lid (215) and the fuel supply inlet (211a) is made accurately.

Furthermore, the swing travel of the damper (225) is reduced while alleviating the seat opening and closing effort because the damper (225) is disposed between the seat (4) and the vehicle frame (2), the piston rod (227) of the damper (225) is connected to the rear frame (15), and the cylinder (226) is connected to the bottom plate (4c) of the seat (4) at the position near the seat hinge (205) and forward of the connecting position of the piston rod (227). Furthermore, since the damper itself is made compact, the layout space is reduced and, as a result, volume of the fuel tank (211) is secured.

Since the damper (225) is located near the seat hinge (205) and within the recess (211c) formed on the top wall (211b) of the fuel tank (211), influence on the fuel capacity by the recess (211c) is small, and capacity and actions for storing and taking out the stored objects are not affected. Since the damper (225) is located in the approximate center of the vehicle width, a single damper is enough for preventing rattle of the seat when it is opened and closed.

With the stand device of this embodiment, when the power unit swings up (right) by an angle (θ), ground clearance is reduced by a dimension (ΔH). However, since the stand proper (236) swings up along the follow-up surface (249) by a dimension (ΔL), reduction in the road clearance at the right end of the stand proper (236) is reduced.

With this stand device described above, reduction in the road clearance of the stand proper (236) due to the swing of the power unit (3) is restricted because the stand proper (236) is provided with freely rotatable rubber roller (245) in the vehicle width center, tilting of both legs (236a, 236b) is prevented, which would occur if the roller (245) is not located in the center. Since the roller (245) is made rotatable, wear due to friction is restricted to prolong the life of the roller (245).

According to the invention, the transmission case cover attached to the outside of the transmission case is split into the front and rear parts, the air cleaner compartment is constituted with the front transmission case cover and the front part of the transmission case, and the suction inlet for introducing cooling air is provided in the rearward extension of the front transmission case cover, the air cleaner compartment is formed with existing parts without increasing the number of parts, entry of water and dust is reduced, and servicing work of replacing or cleaning the air cleaner element is made easy.

With the cooling device of the invention for the power unit, since the air cleaner compartment is formed with the recess formed in the front part of the transmission case and the transmission case cover covering the outside of the transmission case, a suction inlet for introducing cooling air into the transmission case cover, and the air inlet is formed in the recess, the air cleaner compartment is formed by utilizing existing parts without increasing the number of parts, the air cleaner compartment is made with a small depth, cost is reduced, entry of water and dust is reduced, and servicing work of replacing or cleaning the air cleaner element is made easy. The recess provided in the transmission case also increases its rigidity to suppress vibration and noise.

## Claims

1. Continuously variable transmission system (51) of the V-belt type in particular for a motorcycle (1), comprising a drive pulley (70) connectable to a crankshaft (60) of an engine unit (50) and a driven pulley (97) connectable to a driven shaft (96), a V-belt (98) connecting said pulleys (70, 97), a transmission case body (94) and a transmission case cover (95) constituting a transmission case accommodating a belt chamber (V), and a cooling device for cooling said belt chamber (V), **characterized in that** said transmission case cover (95) comprises a front cover (105) and a rear cover (106) as seen in driving direction, wherein said front cover (105) overlaps said rear cover (106) at a joining area of the front cover (105) and the rear cover (106), and wherein a suction inlet (109) being directed to the rear direction opposite to the driving direction, is provided in said joining area.

2. Continuously variable transmission system according to claim 1, **characterized in that** a front part of the outside wall surface of the transmission case cover (95) is provided with a recess (95a) receding toward the drive pulley (70), an air cleaner compartment (107) is formed between the recess (95a) and said front cover (105), and that an air cleaner element (108) is held between said cover (105) and said recess (95a).

3. Continuously variable transmission system according to at least one of claims 1 or 2, **characterized in that** the front cover (105) and a front part of the outside wall surface of the transmission case cover (95) are tightened together and secured so as to sandwich a cleaner element (108).

4. Continuously variable transmission system according to at least one of claims 1 to 3, **characterized in that** the front cover (105) is extended rearwards so that the front outer side of the rear cover (106) is covered by a part of said front cover (105), and that the rear end of said front cover (105) is integrally formed with said suction inlet (109).

5. Continuously variable transmission system according to claims 2 to 4, **characterized in that** said recess (95a) is provided with an inlet opening (103) for introducing cooling air into the belt chamber (V) from the air cleaner compartment (107).

6. Continuously variable transmission system according to at least one of claims 1 to 5, **characterized in that** said V-belt (98) comprises blower blades for moving cooling air introduced through said suction inlet (109).

7. Continuously variable transmission system according to at least one of claims 1 to 6, **characterized in that** a case cover (104) comprising said front and rear covers (105, 106) is formed of a plastic material and provided at the outside of said transmission case cover (95).

8. Continuously variable transmission system according to at least one of claims 1 to 7, **characterized in that** the opening brim of said suction inlet (109) is integrally formed with a bifurcate mouse barrier (109a).

9. Continuously variable transmission system according to at least one of claims 1 to 8, **characterized in that** said suction inlet (109) is provided with a plurality of ribs (105a) at vertical intervals.

10. Continuously variable transmission system according to claim 9, **characterized in that** said ribs (105a) are tilted downward from the front side to the rear side as seen in driving direction and that said ribs (105a) are integrally formed with said front cover (105).

## Patentansprüche

1. Stufenlos veränderliches Getriebesystem (51) vom Keilriementyp, insbesondere für ein Motorrad (1), mit einer Antriebsriemenscheibe (70) verbindbar mit einer Kurbelwelle (60) einer Motoreinheit (50) und einer Abtriebsriemenscheibe (97), verbindbar mit einer Abtriebswelle (96), einem Keilriemen (98), verbindbar mit den Riemenscheiben (70, 97), einem Getriebegehäusekörper (94) und einer Getriebegehäuseabdeckung (95), die ein Getriebegehäuse bilden, das eine Riemenkammer (V) aufnimmt, und einer Kühlvorrichtung zur Kühlung der Riemenkammer (V), **dadurch gekennzeichnet**, daß die Getriebegehäuseabdeckung (95) eine in Fahrtrichtung gesehen vordere Abdeckung (105) und eine hintere Abdeckung (106) aufweist, wobei die vordere Abdeckung (105) die hintere Abdeckung (106) an einem Verbindungsbereich der vorderen Abdeckung (105) und der hinteren Abdeckung (106) überlappt, und wobei eine entgegen der Fahrtrichtung in die rückwärtige Richtung gerichteter Ansaugeinlaß (109) in dem Verbindungsbereich vorgesehen ist.

2. Stufenlos veränderliches Getriebesystem nach Anspruch 1, **dadurch gekennzeichnet**, daß ein vorderer Teil der äußeren Wandoberfläche der Getriebegehäuseabdeckung (95) mit einer in Richtung der Antriebsriemenscheibe (70) zurückreichenden Ausnehmung (95a) versehen ist, eine Luftreinigungskammer (107) zwischen der Ausnehmung (95a) und der vorderen Abdeckung (105) ausgebildet ist, und daß ein Luftreinigungselement (108) zwischen Abdeckung (105) und der Ausnehmung (95a) gehalten.

3. Stufenlos veränderliches Getriebesystem nach mindestens einem der Ansprüche 1 oder 2, **dadurch gekennzeichnet**, daß die vordere Abdeckung (105) und ein vorderer Teil von der äußeren Wandoberfläche von der Getriebegehäuseabdeckung (95) gegeneinander festgezogen und aneinander befestigt sind, um zwischen sich ein Reinigungselement (108) einzuschließen.

4. Stufenlos veränderliches Getriebesystem nach mindestens einem der Ansprüche 1 bis 3, **dadurch gekennzeichnet**, daß die vordere Abdeckung (105) nach rückwärts verlängert ist, so daß die vordere äußere Seite der hinteren Abdeckung (106) durch einen Teil der vorderen Abdeckung (105) abgedeckt wird, und daß das hintere Ende der vorderen Abdeckung (105) einstückig mit dem Ansaugeinlaß (109) ausgebildet ist.

5. Stufenlos veränderliches Getriebesystem nach den Ansprüchen 2 bis 4, **dadurch gekennzeichnet**, daß die Ausnehmung (95a) mit einer Einlaßöffnung (103) zum Einlassen von Kühlluft von der Reinigungskammer (107) in die Riemenkammer (V) versehen ist.

6. Stufenlos veränderliches Getriebesystem nach mindestens einem der Ansprüche 1 bis 5, **dadurch gekennzeichnet**, daß der Keilriemen (98) Gebläseflügel zum Bewegen der Kühlluft durch den Ansaugeinlaß (109) aufweist.

7. Stufenlos veränderliches Getriebesystem nach mindestens einem der Ansprüche 1 bis 6, **dadurch gekennzeichnet**, daß eine Gehäuseabdeckung (104), die die vordere und hintere Abdeckungen (105, 106) aufweist, aus einem Kunststoffmaterial gebildet ist und an der Außenseite der Getriebegehäuseabdeckung (95) vorgesehen ist.

8. Stufenlos veränderliches Getriebesystem nach mindestens einem der Ansprüche 1 bis 7, **dadurch gekennzeichnet**, daß der Öffnungsrand des Ansaugeinlaß (109) einstückig mit einer gabelförmigen Mausbarriere (109a) gebildet ist.

9. Stufenlos veränderliches Getriebesystem nach mindestens einem der Ansprüche 1 bis 8, **dadurch gekennzeichnet**, daß der Ansaugeinlaß (109) mit einer Mehrzahl von Rippen (105a) in vertikalen Abständen gebildet ist.

10. Stufenlos veränderliches Getriebesystem nach Anspruch 9, **dadurch gekennzeichnet**, daß die Rippen (105a) nach unten von der vorderen Seite zu der hinteren Seite in Fahrtrichtung gesehen geneigt sind und daß die Rippen (105a) einstückig mit der vorderen Abdeckung (105) ausgebildet sind.

## Revendications

1. Système de transmission à variation continue (51) du type à courroie trapézoïdale, en particulier pour un motocycle (1), comprenant une poulie d'entraînement (70), susceptible d'être reliée à un vilebrequin (60) d'une unité de moteur (50), et une poulie menée (97), susceptible d'être reliée à un arbre mené (96), une courroie trapézoïdale (98) reliant lesdites poulies (70, 97), un corps de carter de transmissi (94) et un couvercle de carter de transmission (95) constituant un carter de transmission logeant une chambre à courroie (V), et un dispositif de refroidissement pour refroidir ladite chambre à courroie (V), caractérisé en ce que ledit couvercle de carter de transmission (95) comprend un couvercle avant (105) et un couvercle arrière (106), tel qu'on l'observe dans le sens de l'entraînement, dans lequel ledit couvercle avant (105) chevauche ledit couvercle arrière (106) en une zone de jonction du couvercle avant (105) et du couvercle arrière (106), et dans lequel une entrée d'aspiration (109) dirigée vers la direction arrière opposée à la direction d'entraînement est ménagée dans ladite aire de jonction.

2. Système de transmission à variation continue selon la revendication 1, caractérisé en ce qu'une partie avant de la surface de paroi extérieure du couvercle de carter de transmission (95) est munie d'une cavité (95a) descendant vers la poulie d'entraînement 70), un compartiment à filtre à air (107) est formé entre la cavité (95a) et ledit couvercle avant (105), et en ce qu'un élément de filtre à air (108) est maintenu entre ledit couvercle (105) et ladite cavité (95a).

3. Système de transmission à variation continue selon au moins l'une des revendications 1 ou 2, caractérisé en ce que le couvercle avant (105) et une partie avant de la surface de paroi extérieure du couvercle de carter de transmission (95) sont serrés ensemble et fixés de manière à enserrer un élément de filtre (108).

4. Système de transmission à variation continue selon au moins l'une des revendications 1 à 3, caractérisé en ce que le couvercle avant (105) est étendu vers l'arrière, de manière que la face extérieure avant du couvercle arrière (106) soit couverte par une partie dudit couvercle avant (105), et en ce que l'extrémité arrière dudit couvercle avant (105) est formée d'une seule pièce avec ladite entrée d'aspiration (109).

5. Système de transmission à variation continue selon les revendications 2 à 4, caractérisé en ce que ladite cavité (95a) est munie d'une ouverture d'entrée (103) pour l'introduction d'air de refroidissement dans la chambre à courroie (V) depuis le compartiment de filtre à air (107).

6. Système de transmission à variation continue selon au moins l'une des revendications 1 à 5, caractérisé en ce que ladite courroie trapézoïdale (98) comprend des pales de ventilateur pour véhiculer l'air de refroidissement introduit par ladite entrée d'aspiration (109).

7. Système de transmission à variation continue selon au moins l'une des revendications 1 à 6, caractérisé en ce qu'un couvercle de carter (104) comprenant lesdits couvercles avant et arrière (105, 106) est formé en matière plastique et prévu à l'extérieur dudit couvercle de carter de transmission (95).

8. Système de transmission à variation continue selon au moins l'une des revendications 1 à 7, caractérisé en ce que la bordure d'entrée de ladite entrée d'aspiration (109) est formée d'une seule pièce avec une barrière anti-animaux (109a) à forme fourchue.

9. Système de transmission à variation continue selon au moins l'une des revendication 1 à 8, caractérisé en ce que ladite entrée d'aspiration (109) est munie d'une pluralité de nervures (105a) placées à des intervalles verticaux.

10. Système de transmission à variation continue selon la revendication 9, caractérisé en ce que lesdites nervures (105a) sont basculées vers le bas depuis la face avant vers la face arrière lorsqu'on observe dans la direction de l'entraînement, et lesdites nervures (105a) étant formées d'une seule pièce avec ledit couvercle avant (105).
